# EUROPÄISCHE PATENTSCHRIFT

(11) **EP 3 889 076 B1**
(45) Veröffentlichungstag und Bekanntmachung des Hinweises auf die Patenterteilung: **15.02.2023**
(21) Anmeldenummer: 21163526.3
(22) Anmeldetag: 18.03.2021
(51) Int. Cl.: B65G 1/08, B65G 1/137, G07F 11/16, G07F 17/00, G07F 11/26, G07F 11/42, G07F 11/58

(54) **KOMMISSIONIERSYSTEM UND KOMMISSIONIERVERFAHREN**
PICKING SYSTEM AND PICKING METHOD
SYSTÈME DE PRÉPARATION DE COMMANDES ET PROCÉDÉ DE PRÉPARATION DE COMMANDES

(30) Priorität: 02.04.2020 DE 102020109164
(43) Veröffentlichungstag der Anmeldung: 06.10.2021
(73) Patentinhaber: Gollmann Kommissioniersysteme GmbH, 06126 Halle/Saale (DE)
(72) Erfinder: Gollmann, Daniel, 06112 Halle/Saale (DE)
(74) Vertreter: Steiniger, Carmen

(56) Entgegenhaltungen:
- EP-A1- 1 681 247
- EP-A2- 2 557 056
- IT-A1- TO 990 349
- US-A- 3 247 929

## Beschreibung

Die vorliegende Erfindung betrifft ein Kommissioniersystem zur Einlagerung und Auslagerung von Medikamentenpackungen, wobei das Kommissioniersystem ein Ausgaberegal mit einer Mehrzahl übereinander angeordneter Ausgaberegalböden, die von einer Einlagerungsseite des Ausgaberegals zu einer Auslagerungsseite des Ausgaberegals hin schräg nach unten geneigt sind und jeweils eine Mehrzahl paralleler Ausgabekanäle aufweisen, wobei jeweils an einem auf der Auslagerungsseite des Ausgaberegals befindlichen Auslagerungsende des jeweiligen Ausgabekanals eine Abrutschsperre vorgesehen ist; einen Ausgabemechanismus, mit dem die Abrutschsperre öffenbar oder überwindbar ist; eine in einer Breitenrichtung des Ausgaberegals an dessen Auslagerungsseite verlaufende und ein horizontal bewegbares Förderband aufweisende Transporteinrichtung und eine den Ausgabemechanismus steuernde Steuereinrichtung mit einem Eingabemodul, in das wenigstens ein Auftrag zur Abforderung von Medikamentenpackungen aus dem Kommissioniersystem eingebbar ist, aufweist.

Die Erfindung betrifft ferner ein Kommissionierverfahren zur Einlagerung und Auslagerung von Medikamentenpackungen, bei dem in einem Kommissioniersystem die Medikamentenpackungen in mehreren übereinander angeordneten Ausgaberegalböden eines Ausgaberegals gelagert werden, wobei sie nach Eingabe in das Ausgaberegal jeweils in einem Ausgabekanal des Ausgaberegals von einer Einlagerungsseite des Ausgaberegals zu einer Auslagerungsseite des Ausgaberegals hin nach unten bis zu einer Abrutschsperre rutschen, und wobei zur Ausgabe der jeweiligen Medikamentenpackung aus dem Ausgaberegal mit einem auf der Auslagerungsseite des Ausgaberegals befindlichen, durch eine Steuereinrichtung gesteuerten Ausgabemechanismus die Abrutschsperre geöffnet oder überwunden wird; wobei die aus dem Ausgaberegal ausgelagerten Medikamentenpackungen auf einer Auslagerungsseite des Ausgaberegals auf einem Förderband abtransportiert werden.

In automatisierten Apotheken werden Medikamente häufig auf einer anderen Etage oder in anderen - gegebenenfalls weiter entfernten - Räumlichkeiten, als dort, wo sich der Verkaufsraum der Apotheke befindet, in einem speziellen Regalsystem gelagert, aus welchem jeweils angeforderte Medikamentenpackungen automatisch entnommen und über einen entsprechenden Transport- und/oder Rutschmechanismus in den Verkaufsraum geleitet werden können. Diese Form der Auslagerung ist meist recht schnell, da die Fördertechnik der Kommissioniersysteme die Auslagerung bündelt und optimiert, während hingegen bei einer Einlagerung das jeweilige Handhabungsgerät des Kommissioniersystems jeden Lagerplatz einzeln und direkt anfahren muss. Hinzu kommt, dass für die Medikamenteneinlagerung in solche Regalsysteme eine Produkterkennung sowie optional eine Verbrauchsdatenerfassung erforderlich ist, welche Schritte häufig noch zumindest teilweise manuell vorgenommen werden und daher deutlich mehr Zeit benötigen.

Bei der Kommissionierung von Medikamentenpackungen unterscheidet man zwischen sogenannten Schnelldrehern, das heißt, Medikamenten, die oft angefordert werden, und sogenannten Langsamdrehern, das heißt, Medikamenten, die seltener angefordert werden. Schnelldreher müssen eigentlich nach deren Entnahme entsprechend rasch wieder im Regalsystem nachgefüllt werden, was aber vielen bekannten Kommissioniersystemen, die während der Geschäftszeiten der Apotheke in erster Linie die Medikamentenbereitstellung im Verkaufsraum sicherstellen müssen, nicht gelingt. Beispielsweise werden in einer Apotheke typischerweise ca. 2.000 verschiedene Artikel mit in Summe ca. 7.000 Einzelpackungen angeboten, wovon ca. 90 % der Artikel, also ca. 1.800, sogenannte Langsamdreher sind. Die 10 % Schnelldreher machen zwar nur ca. 200 Artikel aus, diese entsprechen aber etwa 50 % des Umsatzes an Einzelpackungen. Ein Kommissionierautomat, der für eine Lagerungen von - in diesem Beispiel - 7.000 Einzelpackungen ausgelegt ist, benötigt zu 50 % der Zeit nur den Zugriff auf 200 Artikel. Wenn diese dann schnell verfügbar sind und schnell nachgefüllt werden können, ist die Auslagerungsgeschwindigkeit bei 50 % aller Vorgänge deutlich erhöht.

Ein Kommissioniersystem der Firma Pharmax weist einerseits ein mehrere übereinander liegende Regalböden aufweisendes Pufferregal für sogenannte Langsamdreher und andererseits ein dem Pufferregal gegenüber befindliches Ausgaberegal für sogenannte Schnelldreher auf. In einem Zwischenraum zwischen dem Pufferregal und dem Ausgaberegal ist ein beide Regale befüllender Greifroboter vorgesehen. Das Ausgaberegal weist mehrere, übereinanderliegende und parallele Ausgabekanäle aufweisende Ausgaberegalböden auf, die ausgehend von einer sich an dem Zwischenraum befindlichen Befüllungsseite hin zu einer Ausgabeseite des Ausgaberegals schräg nach unten geneigt sind.

Für eine Einlagerung von Medikamentenpackungen in dieses Regalsystem werden diese zunächst von einer Person unter einen Scanner gehalten und dann nacheinander in einer Reihe auf einem Förderband abgelegt. Der eine Aufnahmeplatte aufweisende Greifroboter nimmt daraufhin von bestimmten Stellen auf dem Förderband Medikamentenpackungen nacheinander auf die Aufnahmeplatte auf und fährt mit diesen zunächst vor eine Einlagerungsposition in dem Pufferregal, an der dann die zuletzt aufgenommenen Medikamentenpackungen aus dem Aufnahmekanal nacheinander auf den jeweiligen Regalboden des Pufferregals geschoben werden. Die Kapazität der Aufnahmeplatte ist aber begrenzt, sodass eine Bündelung von Einlagerungsvorgängen nur eingeschränkt gelingt und somit die Einlagerungszeit des Vorgangs nur gering verkürzt wird. Daraufhin fährt der Greifroboter vor eine weitere Einlagerungsposition des Pufferregals oder einen Ausgabekanal des Ausgaberegals und schiebt dort die weiteren, auf der Aufnahmeplatte des Greifroboters aufgenommenen Medikamentenpackungen hinein. Daraufhin werden erneut Medikamentenpackungen durch den Greifroboter vom Förderband aufgenommen und die beiden Regale damit bestückt usw.

Ferner werden durch den Greifroboter Medikamentenpackungen aus dem Pufferregal entnommen und daraufhin in Ausgabekanäle des Ausgaberegals abgegeben.

Durch die Schräge der Ausgabekanäle rutschen die Medikamentenpackungen in diesen Ausgabekanälen nach unten. An einem unteren, auf der Ausgabeseite des Ausgaberegals befindlichen Ende der Ausgabekanäle ist jeweils eine Abrutschsperre vorgesehen. Um die Medikamentenpackungen aus dem jeweiligen Ausgabekanal abgeben zu können, wird die Abrutschsperre durch einen elektro-mechanischen Auslöser nach unten gezogen, woraufhin die Medikamentenpackungen aus dem Ausgabekanal nach unten auf ein Förderband fallen.

Da sich die Ausgabekanäle auf unterschiedlichen Höhen befinden, fallen die Medikamentenpackungen aus diesen unterschiedlichen Höhen auf das sich unter allen Regalböden des Ausgaberegals befindliche Förderband. Befinden sich in den Medikamentenpackungen beispielsweise Glasflaschen, können diese durch das Herunterfallen zu Bruch gehen. Auch können sich Medikamentenpackungen öffnen. Außerdem liegen die heruntergefallenen und dabei umherspringenden Medikamentenpackungen völlig ungeordnet auf dem Förderband und werden somit auch ungeordnet ausgegeben. Das kann insbesondere bei einer Mehrzahl rasch aufeinander erfolgender Medikamentenanforderungen, sogenannten Aufträgen oder Jobs, zu Verzögerungen führen, da immer nur ein Auftrag mit einem oder mehreren Artikeln mit je einer oder mehreren Einzelpackungen abgearbeitet und ausgegeben werden kann, wobei der nächste Auftrag nur mit einem vorher entleerten Förderband bearbeitet werden kann, um die einzelnen Aufträge mit gegebenenfalls unterschiedlichen Ausgabezielen nicht zu durchmischen.

Die Firma Tecnilab stellt ein Kommissioniersystem für Medikamentenpackungen her, das ein Ausgaberegal mit einer Mehrzahl von schrägen Regalböden mit parallel verlaufenden Ausgabekanälen aufweist. Das Ausgaberegal wird auf dessen Einlagerungsseite manuell bestückt. Hierfür werden von einer Person einzeln und nacheinander Medikamentenpackungen eingescannt und dann in bestimmte Ausgabekanäle gegeben, an deren Eingang -je nach Scanergebnis - Leuchtdioden leuchten, um der Person die Einlagerung zu erleichtern.

An den Enden der Ausgabekanäle ist jeweils ein ansteuerbarer Auswurfhebel vorgesehen, durch die eine jeweils im Ausgabekanal unten liegende Medikamentenpackung ausgehebelt und dadurch ausgeworfen werden kann. Das Ausgaberegal weist auf seiner Ausgabeseite eine Abrutschplatte auf, über die die jeweils ausgeworfenen Medikamentenpackungen nach unten auf ein Förderband rutschen. Das Förderband kann gemeinsam mit der Abrutschplatte auf unterschiedliche Höhen des Ausgaberegals gefahren werden. Dadurch wird die Höhe, aus der die Medikamentenpackungen nach unten fallen, verringert, sodass auch die Bruchgefahr verringert wird. Problematisch ist jedoch auch bei dieser Vorrichtung, dass die Medikamentenpackungen ungeordnet auf das Förderband fallen, wodurch die Reihenfolge der Medikamente durcheinander gebracht wird. Auch hier können Aufträge nur einzeln abgearbeitet werden, eine Kommissionierung unterschiedlicher Aufträge auf dem Förderband ist nicht möglich.

In der US-Druckschrift 3,750,804 ist ein Lagersystem beschrieben, welches wenigstens ein Lagerregal mit mehreren geneigt angeordneten Trägern aufweist. Am Ende der Träger ist jeweils eine schwenkbare Transferplatte angeordnet, die dem Halten und Freigeben von auf den Trägern vorgesehenen Artikeln dient. Die Artikel werden mittels eines Regalförderkrans von den Trägern entnommen. Der Regalförderkran weist eine vertikal verfahrbare Handhabungsvorrichtung auf, die wenigstens ein in Verlängerung zu den Trägern bringbares Förderband aufweist. Zusätzlich zu dem Förderband kann die Handhabungsvorrichtung eine parallel zu dem Förderband, an einem Teleskopstil angeordnete Saugvorrichtung besitzen.

Die Druckschrift DE 196 35 396 A1 beschreibt ein Regallagersystem mit einem Einlagerungsbereich, einem Lagerbereich, einem Auslagerungsbereich und einem auf Schienen verfahrbaren Regalbediengerät. Der Einlagerungsbereich und der Lagerbereich weisen beidseitig eines Regalganges angeordnete Regale auf. Entlang des Regalganges ist das Regalbediengerät verfahrbar. Das Regalbediengerät besteht aus einer Fahreinheit, einem auf der Fahreinheit angeordneten Mast und einem entlang des Mastes verfahrbaren Hubtisch, an dem eine Einlagerungsvorrichtung und zwei Auslagerungsvorrichtungen vorgesehen sind. Die Auslagerungsvorrichtungen weisen Sauggreifer auf. Die Einlagerungsvorrichtung ist im Wesentlichen aus einer Rutsche ausgebildet, die der Übernahme eines Stückgutes von einer Lagerbahn des Einlagerungsbereiches bzw. der Übergabe eines Stückgutes von der Rutsche auf eine Lagerbahn des Lagerbereiches dient.

Eine Vorrichtung zur Ausgabe von in Reihe gelagerten Gegenständen ist in der Druckschrift DE 601 06 516 T2 offenbart. Die Vorrichtung weist mehrere Gleitschienen zum Lagern und Transportieren der Gegenstände auf. Die Gleitschienen sind geneigt in der Vorrichtung angebracht, wodurch die Gegenstände in Richtung einer Ausgabe rutschen. Am Ende der Gleitschienen ist jeweils ein Anschlag vorgesehen, der die Gegenstände an einem ungewollten Herunterrutschen von der jeweiligen Gleitschiene hindert. Zur Entnahme eines Gegenstandes von einer der Gleitschienen ist der Anschlag wegklappbar bzw. weist die Vorrichtung einen Heber auf, mittels welchem der Gegenstand über den Anschlag gehoben werden kann. Der ausgelagerte Gegenstand wird von einem Förderband übernommen.

Die Druckschrift EP 1 236 659 A2 beschreibt eine Kommissionieranlage mit wenigstens einem Regal mit mehreren übereinander angeordneten Ebenen zur Aufnahme von Artikeln. Jede Ebene des Regals besitzt nebeneinander angeordnete Winkelbleche, die doppelt geneigt sind, sodass diese eine im Querschnitt rechtwinklige und in Längsrichtung schräge Rinne mit einer Längsneigung ausbilden. Ferner weist die Kommissionieranlage ein eine Artikelaufnahme aufweisendes Regalbediengerät auf, welches über ein Schienensystem zu den einzelnen Regalen der Kommissionieranlage verfahrbar ist.

Das Dokument IT TO 990 349 A1 offenbart ein Kommissioniersystem gemäß dem Oberbegriff des Anspruchs 1 und ein Kommissionierverfahren gemäß dem Oberbegriff des Anspruchs 7.

Es ist daher die Aufgabe der vorliegenden Erfindung, ein Kommissioniersystem der eingangs angegebenen Gattung zur Verfügung zu stellen, das eine schnelle und dennoch produktschonende und zuordnungssichere Ausgabe von Medikamentenpackungen ermöglicht.

Diese Aufgabe wird durch ein Kommissioniersystem zur Einlagerung und Auslagerung von Medikamentenpackungen gelöst, wobei das Regalsystem ein Ausgaberegal mit einer Mehrzahl übereinander angeordneter Ausgaberegalböden, die von einer Einlagerungsseite des Ausgaberegals zu einer Auslagerungsseite des Ausgaberegals hin schräg nach unten geneigt sind und jeweils eine Mehrzahl paralleler Ausgabekanäle aufweisen, wobei jeweils an einem auf der Auslagerungsseite des Ausgaberegals befindlichen Auslagerungsende des jeweiligen Ausgabekanals eine Abrutschsperre vorgesehen ist; einen Ausgabemechanismus, mit dem die Abrutschsperre öffenbar oder überwindbar ist; eine in einer Breitenrichtung des Ausgaberegals an dessen Auslagerungsseite verlaufende und ein horizontal bewegbares Förderband aufweisende Transporteinrichtung und eine den Ausgabemechanismus steuernde Steuereinrichtung mit einem Eingabemodul, in das wenigstens ein Auftrag zur Abforderung von Medikamentenpackungen aus dem Kommissioniersystem eingebbar ist, aufweist, wobei eine sich auf der Auslagerungsseite vor den Auslagerungsenden in der Breitenrichtung des Ausgaberegals erstreckende und von den Auslagerungsenden weg nach unten geneigte Abrutschplatte angeordnet ist, wobei die von der Steuereinrichtung gesteuerte Transporteinrichtung sich längs der Abrutschplatte erstreckt und mit dem Förderband und der Abrutschplatte an der Auslagerungsseite des Ausgaberegals vertikal verfahrbar ist, wodurch das Förderband in unterschiedlichen Förderhöhen positionierbar ist, wobei das Förderband in den unterschiedlichen Förderhöhen horizontal in entgegengesetzten Transportrichtungen durch die Steuereinrichtung derart sowohl hin und her verfahrbar als auch für eine Auslagerung wenigstens einer Medikamentenpackung vor wenigstens einem Auslagerungsende temporär stoppbar ist, dass die auf das Förderband ausgelagerten Medikamentenpackungen auf dem Förderband in einer einzigen Reihe nebeneinander liegen und die Anzahl, Gruppierung und Lagereihenfolge dieser Medikamentenpackungen auf dem Förderband dem wenigstens einen Auftrag zur Abforderung von Medikamentenpackungen entspricht.

Das Förderband befindet sich neben dem Ausgaberegal. Die Position des Förderbandes wird bei der vorliegenden Erfindung durch die Steuereinrichtung so gesteuert, dass eine leere Stelle auf dem Förderband direkt vor einem Ausgabekanal, der sich in unterschiedlichen Förderhöhen befinden kann, positioniert wird. Dann wird ebenfalls durch die Steuereinrichtung der Ausgabemechanismus an diesem Ausgabekanal aktiviert, sodass eine Medikamentenpackung aus dem Ausgabekanal auf diese Stelle auf dem Förderband gelangen kann. Es können auch mehrere Medikamentenpackungen nacheinander aus dem Ausgabekanal auf das Förderband gelangen, wobei dann allerdings das Förderband zur Aufnahme jeder weiteren Medikamentenpackung etwas weiter bewegt wird, um der weiteren Medikamentenpackung ihren eigenen definierten Bereich auf dem Förderband zuzuordnen.

Dabei kann das Förderband mittels der Steuereinrichtung in unterschiedliche Transportrichtungen bewegt werden. Hat das Förderband ein oder mehrere Medikamentenpackungen an der jeweiligen Position vor dem Ausgaberegal aufgenommen, kann es mittels der Transporteinrichtung vertikal auf eine andere Regalbodenebene verfahren werden und/oder horizontal in einer der Transportrichtungen bewegt werden, sodass eine andere leere Stelle auf dem Förderband vor einem anderen Ausgabekanal dieser Realbodenebene des Ausgaberegals positioniert wird.

Je nach Auftrag wird das Förderband somit an entsprechende Positionen an dem Ausgaberegal bewegt, bis die in dem Auftrag enthaltenen Medikamentenpackungen beispielsweise in einer Gruppe auf dem Förderband zusammengestellt sind. Das Zusammenstellen in einer Gruppe heißt jedoch nicht unbedingt, dass alle einem Auftrag zugehörigen Medikamentenpackungen direkt nebeneinander in einer Gruppe auf dem Förderband stehen müssen. Das kann zwar so sein, ist aber deswegen nicht unbedingt nötig, weil in dem erfindungsgemäßen Kommissioniersystem jede Medikamentenpackung an jeder Stelle auf dem Förderweg identifiziert ist. So können die einem Auftrag zuzuordnenden Medikamentenpackungen zumindest teilweise auf getrennten Förderwegen zusammengestellt werden und sich erst an der Medikamentenausgabe des Kommissioniersystems treffen. Durch die gesteuerte Auf- und Ab- als auch Hin- und Her-Bewegbarkeit des Förderbandes wird es jedoch bei dem erfindungsgemäßen Kommissioniersystem ermöglicht, dass in optimal kurzer Zeit, je nach Aufträgen, entsprechende Gruppen von Medikamentenpackungen zusammengestellt und der Medikamentenausgabe des Kommissioniersystems zugeführt werden können. Es werden also ein oder mehrere Aufträge mit je einer oder mehreren je gleichen oder unterschiedlichen Einzelpackungen auf dem Förderband kommissioniert und an einer oder unterschiedlichen Ausgabestellen des Kommissioniersystems auftragsbezogen entleert oder einer fortführenden Förderstrecke übergeben.

Das erfindungsgemäße Kommissioniersystem ermöglicht somit eine Kommissionierung von Medikamentenpackungen bereits auf dem Förderband. Dabei liegen Medikamentenpackungen mit bekannter Reihenfolge, vereinzelt und mit räumlicher Trennung der einzelnen Medikamentenpackungen auf dem Förderband. Ausgehend von dieser Medikamentenanordnung auf dem Förderband kann nachfolgend, also beim Abgang vom Förderband, eine weitere Kommissionierung der Medikamentenpackungen vorgenommen werden. Das spart Zeit, da viele Aufträge für Entnahmen schon auf dem Förderband kommissioniert werden können. Gleiche Medikamentenpackungen können mehreren Aufträgen bei einem einzigen Kommissioniervorgang zugeordnet werden. Gerade die eher geringe Artikelvielfalt der Schnelldreher ergibt häufiger, dass gleiche Medikamentenpackungen in mehreren Aufträgen vorkommen. Das Förderband puffert die jeweiligen Entnahmen und ordnet sie den Aufträgen durch horizontale Bewegungen zu.

Mit dem erfindungsgemäßen Kommissioniersystem können mehrere Medikamentenpackungen gebündelt ausgelagert werden und trotzdem gezielt einzelne Medikamentenpackungen getrennten Förderwegen zugeleitet werden.

Da bei der vorliegenden Erfindung die zwischen dem Ausgaberegal und dem Förderband befindliche Abrutschplatte immer mit einer vertikalen Bewegung des Förderbandes mitverfahren wird, ist zudem bei der vorliegenden Erfindung bei jeder Medikamentenpackungsentnahme aus dem Ausgaberegal eine packungs- und produktschonende Entnahme garantiert. Ferner bleibt die Sortierung auch bei einer Medikamentenpackungsauslagerung aus oberen Regalböden erhalten.

Vorzugsweise weist die Abrutschsperre einen an dem Auslagerungsende des jeweiligen Ausgaberegalbodens angeordneten Querriegel und der Ausgabemechanismus einen hinter dem Querriegel positionierbaren, vertikal bewegbaren und dabei den Querriegel von unten hintergreifenden Auswurfhebel auf.

Der Auswurfhebel befindet sich für einen Medikamentenpackungsauswurf unterhalb eines vorderen Abschnittes einer Medikamentenpackung. Dieser vordere Abschnitt der an einem unteren Ende des Ausgabekanals liegenden Medikamentenpackung ragt hierfür über den Boden des Ausgaberegals nach vorn hinaus. Durch eine Hebelbewegung des Auswurfhebels wird die Medikamentenpackung über den Querriegel hinweg angehoben und somit aus dem Ausgabekanal heraus gehebelt. Der Auswurfhebel kann beispielsweise finger- oder stößelförmig ausgebildet sein.

Besonders günstig ist es, wenn der Auswurfhebel schwenkbar an einer Hebelhalterung montiert ist, die auf einer längs der Breitenrichtung des Ausgaberegals verlaufenden, also parallel zur Transportrichtung und unterhalb des Förderbandes montierten Schiene verfahrbar ist.

Dies hat den Vorteil, dass nur ein Auswurfhebel benötigt wird, der je nach Auftrag an eine Auswurfposition an dem Ausgaberegal horizontal und vertikal bewegt werden kann, wobei die Auswurfposition in unterschiedlichen Ebenen des Ausgaberegals sein kann. Der Auswurfhebel positioniert sich unabhängig von dem Förderband und kann so während der Fahrt des Förderbandes zur nächsten Ebene des Ausgaberegals sich bereits auf diese Ebene vor den entsprechenden Ausgabekanal bewegen. Das spart Zeit.

In einer vorteilhaften Ausführungsform der vorliegenden Erfindung weist das Kommissioniersystem auf der Einlagerungsseite des Ausgaberegals eine automatische Einlagerungseinrichtung, die Produktvereinzelungselemente und eine Produkterkennungseinrichtung aufweist, und eine in einer Höhenrichtung und in der Breitenrichtung des Ausgaberegals an dem Ausgaberegal verfahrbare und hinsichtlich ihrer Bewegung und Positionierung mit einer Produktausgabeeinheit der automatischen Einlagerungseinrichtung synchronisierte erste Greifereinrichtung auf.

Durch die automatische Einlagerungseinrichtung wird eine kontinuierliche Medikamentenpackungseinlagerung sichergestellt. Dabei werden vollautomatisch die Produktidentifikations- und Verfallsdaten der Medikamentenpackungen erfasst, während zeitgleich eine hocheffektive, schädigungsfreie und zuordnungssichere Auslagerung von Medikamentenpackungen durch das Ausgaberegal erfolgt.

Bei dieser Ausführungsform ist es besonders von Vorteil, wenn das Kommissioniersystem ein gegenüber dem Ausgaberegal angeordnetes Pufferregalsystem mit wenigstens zwei parallel zueinander angeordneten und einen Manövrierabstand zueinander aufweisenden oder in den Manövrierabstand zueinander verfahrbaren Einzelregalen, wobei jedes der Einzelregale eine Mehrzahl übereinander angeordneter Pufferregalböden mit einer Mehrzahl paralleler Einlagerungskanäle aufweist, wobei die automatische Einlagerungseinrichtung in einem Übergabeabstand zwischen dem Ausgaberegal und dem Pufferregalsystem angeordnet ist, und eine in einer Höhenrichtung, einer Breitenrichtung und einer Längenrichtung des Pufferregalsystems an und zwischen den Einzelregalen des Pufferregalsystems und innerhalb des Übergabeabstandes verfahrbare, hinsichtlich ihrer Bewegung und Positionierung mit der automatischen Einlagerungseinrichtung synchronisierte zweite Greifereinrichtung aufweist.

Diese Ausführungsform besitzt den Vorteil, dass durch die automatische Einlagerungseinrichtung eine schnelle und effektive Medikamenteneinlagerung erfolgen kann, wobei das Pufferregalsystem über die dieses bestückende und mit der automatischen Einlagerungseinrichtung zusammen arbeitende zweite Greifereinrichtung mit den von der automatischen Einlagerungseinrichtung als sogenannte Langsamdreher identifizierten Medikamentenpackungen beliefert werden kann, während zeitlich parallel das Ausgaberegal mittels der automatischen Einlagerungseinrichtung mit sogenannten Schnelldrehern bestückt wird.

Bei dieser Ausführungsform des erfindungsgemäßen Kommissioniersystems findet also eine Entkopplung der Verfahrwege der zweiten Greifereinrichtung, die das als Langsamdreherregal fungierende Pufferregalsystems bestückt als auch aus diesem Medikamentenpackungen entnimmt, von den Verfahrwegen der ersten Greifereinrichtung statt, die das vorrangig als Schnelldreherregal fungierende Ausgaberegal beliefert. Dabei steht das Schnelldreherregal direkt neben der automatischen Einlagerungseinrichtung und kann somit schnellstmöglich mit Schnelldrehern bestückt werden.

In einer alternativen Ausführungsform der vorliegenden Erfindung weist das Kommissioniersystem ein einer Einlagerungsseite des Ausgaberegals in einem Übergabeabstand gegenüber angeordnetes Pufferregalsystem mit wenigstens zwei parallel zueinander angeordneten und einen Manövrierabstand zueinander aufweisenden oder in den Manövrierabstand zueinander verfahrbaren Einzelregalen, wobei jedes der Einzelregale eine Mehrzahl übereinander angeordneter Pufferregalböden mit einer Mehrzahl paralleler Einlagerungskanäle aufweist; eine in einer Höhenrichtung und der Breitenrichtung des Ausgaberegals an dem Ausgaberegal verfahrbare erste Greifereinrichtung und eine in einer Höhenrichtung, einer Breitenrichtung und einer Längenrichtung des Pufferregalsystems innerhalb des Pufferregalsystems und innerhalb des Übergabeabstandes verfahrbare und hinsichtlich ihrer Bewegung und Positionierung auf die erste Greifereinrichtung synchronisierte zweite Greifereinrichtung auf.

Diese Ausführungsform der Erfindung nutzt also zwei zeitlich parallel arbeitende Greifereinrichtungen. Die beiden Greifereinrichtungen werden auf voneinander getrennten mehrdimensionalen Achssystemen geführt. Dabei hat die zweite Greifereinrichtung an und in dem Pufferregalsystem deutlich längere Wege zurückzulegen als die erste Greifereinrichtung, welche sich lediglich an dem Ausgaberegal auf und ab sowie hin und her bewegt. Beispielsweise kann ein Pufferregalsystem mehrere Meter lang sein. Aufgrund der vergleichsweise viel geringeren Wege, die die erste Greifereinrichtung zurücklegen muss, ist es durch diese möglich, viel mehr Medikamentenpackungen pro Stunde in das Ausgaberegal einzulagern. Die erste Greifereinrichtung bedient also das Schnelldreherregal und ist wesentlich schneller als die zweite Greifereinrichtung, die die Langsamdreherregale des Pufferregalsystems bewirtschaftet.

Bei dieser Ausführungsform des erfindungsgemäßen Kommissioniersystems findet also eine Entkopplung der Verfahrwege der zweiten Greifereinrichtung, die vorrangig das als Langsamdreherregal fungierende Pufferregalsystems bestückt als auch aus diesem Medikamentenpackungen entnimmt, von den Verfahrwegen der ersten Greifereinrichtung statt, die das vorrangig als Schnelldreherregal fungierende Ausgaberegal beliefert. Hierfür nutzen die beiden Greifereinrichtungen voneinander getrennte Schienensysteme. Grundsätzlich ist es bei dieser Ausführungsform der Erfindung möglich, dass die zweite Greifereinrichtung sowohl das Pufferregalsystem als auch das Ausgaberegal bedient. Es ist grundsätzlich auch möglich, dass die zweite Greifereinrichtung Medikamentenpackungen von der automatischen Einlagerungseinrichtung aufnimmt und diese in den Langsamdreherbereich des Pufferregalsystems einlagert oder an die erste Greifereinrichtung für die Einlagerung in das als Schnelldreherregal fungierende Ausgaberegal übergibt.

Die Aufgabe wird ferner durch ein Kommissionierverfahren zur Einlagerung und Auslagerung von Medikamentenpackungen gelöst, bei dem in einem Kommissioniersystem die Medikamentenpackungen in mehreren übereinander angeordneten Ausgaberegalböden eines Ausgaberegals gelagert werden, wobei sie nach Eingabe in das Ausgaberegal jeweils in einem Ausgabekanal des Ausgaberegals von einer Einlagerungsseite des Ausgaberegals zu einer Auslagerungsseite des Ausgaberegals hin nach unten bis zu einer Abrutschsperre rutschen, und wobei zur Ausgabe der jeweiligen Medikamentenpackung aus dem Ausgaberegal mit einem auf der Auslagerungsseite des Ausgaberegals befindlichen, durch eine Steuereinrichtung gesteuerten Ausgabemechanismus die Abrutschsperre überwunden wird; wobei die aus dem Ausgaberegal ausgelagerten Medikamentenpackungen auf einer Auslagerungsseite des Ausgaberegals auf ein Förderband rutschen und von dem Förderband abtransportiert werden, und wobei in die Steuereinrichtung mit einem Eingabemodul wenigstens ein Auftrag zur Abforderung von Medikamentenpackungen aus dem Kommissioniersystem eingegeben wird, wobei in dem Kommissionierverfahren die aus dem Ausgaberegal austretenden Medikamentenpackungen über eine davor befindliche Abrutschplatte auf das Förderband rutschen und das Förderband mit der Abrutschplatte an der Auslagerungsseite des Ausgaberegals vertikal zur Aufnahme von Medikamentenpackungen verfahren wird, wobei das Förderband in unterschiedlichen Förderhöhen positioniert wird, wobei das Förderband in den unterschiedlichen Förderhöhen horizontal in entgegengesetzten Transportrichtungen durch die Steuereinrichtung derart hin und her verfahren als auch für eine Auslagerung wenigstens einer Medikamentenpackung vor wenigstens einem Auslagerungsende temporär gestoppt wird, sodass die auf das Förderband ausgelagerten Medikamentenpackungen auf dem Förderband in einer einzigen Reihe nebeneinander liegen und die Anzahl, Gruppierung und Lagereihenfolge dieser Medikamentenpackungen auf dem Förderband dem wenigstens einen Auftrag zur Abforderung von Medikamentenpackungen entspricht.

Bevorzugte Ausführungsformen der vorliegenden Erfindung, deren Aufbau, Funktion und Vorteile werden im Folgenden anhand von Figuren näher erläutert. Dabei zeigen
- Figur 1: schematisch eine Ausführungsform eines erfindungsgemäßen Kommissioniersystems mit einer automatischen Einlagerungseinrichtung und einem damit über eine Greifereinrichtung in Verbindung stehenden Ausgaberegal in einer perspektivischen Seitenansicht von links;
- Figur 2: schematisch das Kommisioniersystem aus Figur 1 in einer perspektivischen Rückansicht;
- Figur 3: schematisch das Kommissioniersystem aus den Figuren 1 und 2 in einer perspektivischen Seitenansicht von rechts;
- Figur 4: schematisch einen Ausschnitt einer Einlagerungsseite eines Ausgaberegals des in den Figuren 1 bis 3 oder des in den Figuren 7 und 8 oder des in Figur 9 gezeigten erfindungsgemäßen Kommissioniersystems in einer perspektivischen Seitenansicht von links;
- Figur 5: schematisch einen Ausschnitt einer Auslagerungsseite des Ausgaberegals des in den Figuren 1 bis 3 oder des in den Figuren 7 und 8 oder des in Figur 9 gezeigten erfindungsgemäßen Kommissioniersystems mit dargestellter Abrutschplatte in einer perspektivischen Vorderansicht;
- Figur 6: schematisch einen Ausschnitt einer Auslagerungsseite des Ausgaberegals des in den Figuren 1 bis 3 oder des in den Figuren 7 und 8 gezeigten Kommissioniersystems mit nicht dargestellter Abrutschplatte in einer perspektivischen Vorderansicht;
- Figur 7: schematisch einen Bereich einer weiteren Ausführungsform eines erfindungsgemäßen Kommissioniersystems mit einem Pufferregalsystem, einem Ausgaberegal sowie ersten und zweiten Greifereinrichtungen in einer perspektivischen Seitenansicht von links;
- Figur 8: schematisch einen vergrößerten Ausschnitt der Ausführungsform aus Figur 6 mit einer anderen Stellung der Greifereinrichtungen in einer perspektivischen Seitenansicht von links;
- Figur 9: schematisch eine weitere Ausführungsform eines erfindungsgemäßen Kommissioniersystems mit einem Pufferregalsystem, einer automatischen Einlagerungseinrichtung, einem Ausgaberegal und zwei Greifereinrichtungen in einer perspektivischen Seitenansicht von links;
- Figur 10: beispielhaft für unterschiedliche Ausführungsformen des erfindungsgemäßen Kommissionierverfahrens schematisch zwei in ein erfindungsgemäßes Kommissioniersystem eingegebene Aufträge;
- Figur 11: schematisch erste Schritte eines möglichen Auslagerungsablaufs bei dem erfindungsgemäßen Kommissionierverfahren;
- Figur 12: schematisch weitere Schritte eines möglichen Auslagerungsablaufs bei dem erfindungsgemäßen Kommissionierverfahren; und
- Figur 13: schematisch noch weitere Schritte eines möglichen Auslagerungsablaufs bei dem erfindungsgemäßen Kommissionierverfahren.

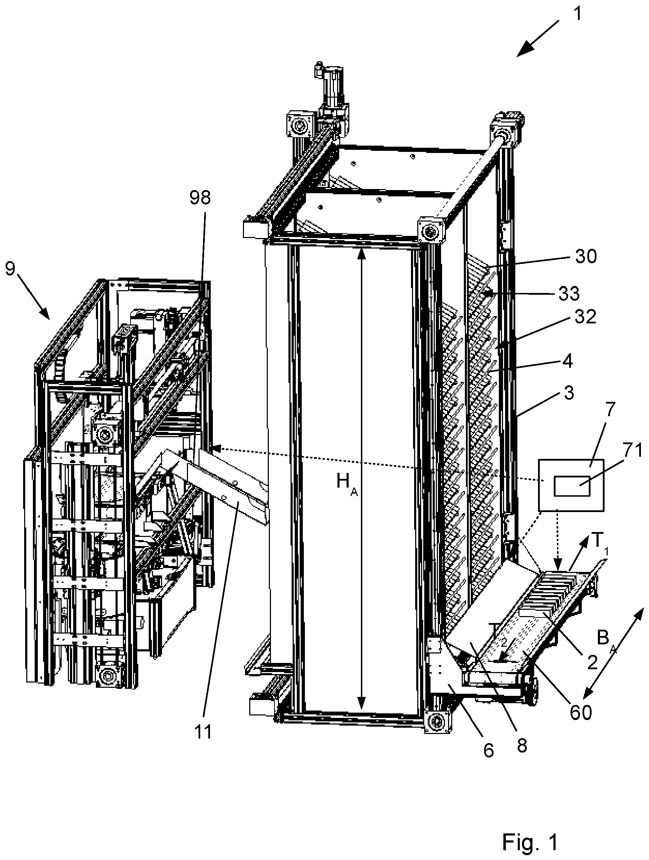

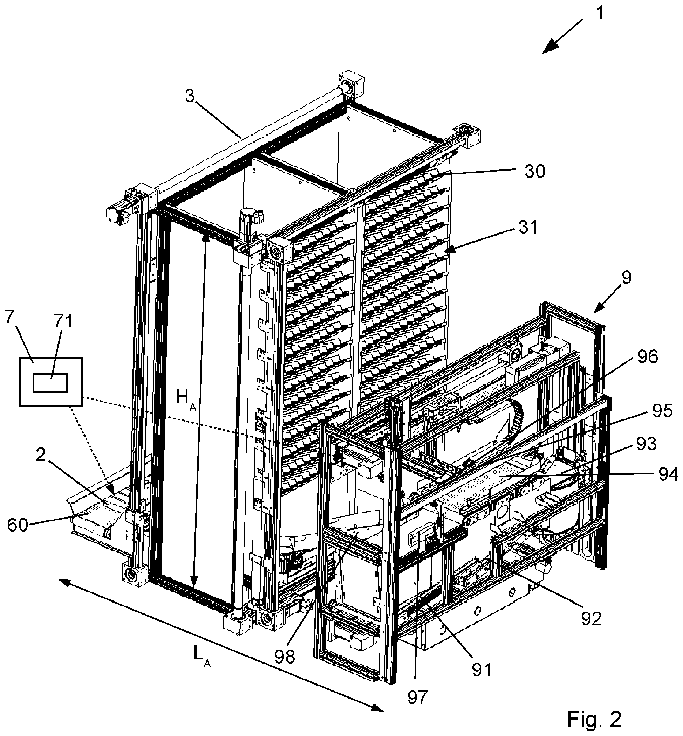

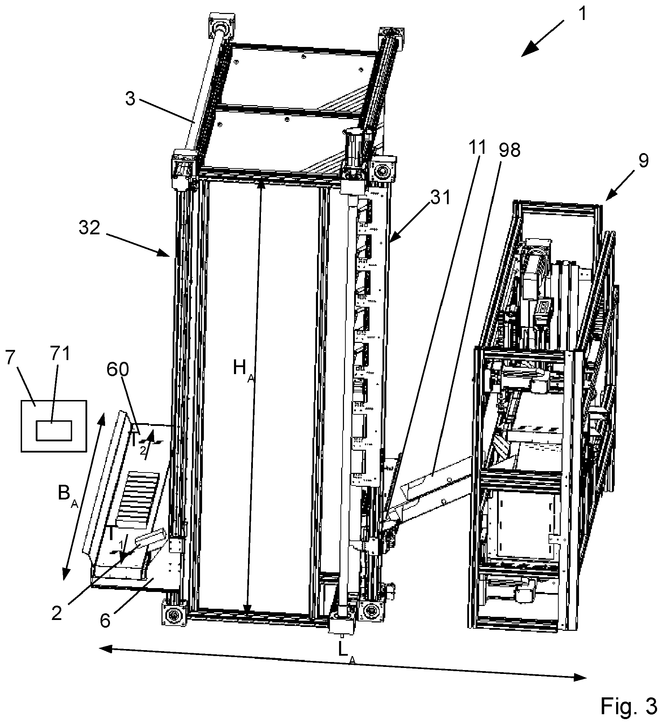

Die Figuren 1 und 3 zeigen schematisch eine Ausführungsform eines erfindungsgemä-ßen Kommissioniersystems 1 in verschiedenen perspektivischen Seitenansichten. Figur 2 zeigt das Kommissioniersystem 1 in einer perspektivischen Rückansicht.

Das Kommissioniersystem 1 weist eine automatische Einlagerungseinrichtung 9 und ein damit über eine Greifereinrichtung 11 in Verbindung stehendes Ausgaberegal 3 auf.

Die automatische Einlagerungseinrichtung 9 weist auf ihrer in Figur 2 vorn zu sehenden Seite eine hier nicht dargestellte Einschüttungseinheit auf, durch welche eine Mehrzahl ungeordneter Medikamentenpackungen 2 in die automatische Einlagerungseinrichtung 9 eingegeben werden kann.

Die Medikamentenpackungen 2 sind in der gezeigten Ausführungsform quaderförmig. In anderen, nicht gezeigten Ausführungsformen der vorliegenden Erfindung können die Medikamentenpackungen 2 auch eine andere Form aufweisen, beispielsweise zylinderförmig oder in Form von Dosen ausgebildet sein.

Die Einschüttungseinheit kann beispielsweise in Form einer Wanne, eines Fensters mit einer sich daran anschließenden Schräge, eines Kanals, einer Luke oder einer Eingabeklappe ausgebildet sein. Direkt nach der Einschüttungseinheit liegen die eingegebenen Medikamentenpackungen typischerweise ungeordnet neben- und übereinander. Dabei können die Medikamentenpackungen 2 sowohl hinsichtlich ihres Inhalts als auch hinsichtlich ihrer Packungsgröße unterschiedlich als auch gleichartig sein.

Die eingegebenen Medikamentenpackungen 2 durchlaufen daraufhin eine hier mehrere Produktvereinzelungselemente aufweisende Produktvereinzelung.

Die Produktvereinzelung weist zunächst ein eine Steigung aufweisendes und mit einer ersten Fördergeschwindigkeit bewegtes erstes Förderband 91 und ein von dem ersten Förderband 91 an seinem Förderbandanfang überlapptes, eine Steigung aufweisender und mit einer zweiten Förderbandgeschwindigkeit bewegtes zweites Förderband 92 auf. Das erste Förderband 91 und das zweite Förderband 92 befinden sich in dem dargestellten Ausführungsbeispiel in einer unteren Ebene der automatischen Einlagerungseinrichtung 9. Die zweite Förderbandgeschwindigkeit ist größer als die erste Förderbandgeschwindigkeit.

Die durch die Einschüttungseinheit eingegebenen Medikamentenpackungen 2 werden beispielsweise mittels einer Rutsche oder einer Hubeinrichtung auf das erste Förderband 91 befördert und werden von diesem auf das zweite Förderband 92 abgeworfen, wodurch sich bei jeder Übergabe eine verbesserte Vereinzelung der Medikamentenpackungen 2 ergibt. Dadurch werden die Medikamentenpackungen 2 hinsichtlich ihrer Lage auseinandergezogen. Jedenfalls liegen am Ende des zweiten Förderbandes 92 die Medikamentenpackungen 2 nicht mehr übereinander. Es entstehen kleinere Losgrößen von Medikamentenpackungen 2.

Die Medikamentenpackungen 2 gelangen in der gezeigten Ausführungsform daraufhin über einen Lift 93 und eine im Lift 93 integrierte Dreh- und Kippvorrichtung auf ein drittes Förderband 94, welches sich in einer Ebene oberhalb des ersten Förderbandes 91 und des zweiten Förderbandes 92 befindet. Dabei werden die Medikamentenpackungen 2 zunächst von dem sich nach dem zweiten Förderband 92 befindlichen Lift 93 aufgenommen. Nach einem Hochfahren des Lifts 93 dreht sich dieser um und kippt die Medikamentenpackungen 2 auf das dritte Förderband 94.

Die Medikamentenpackungen 2 durchlaufen daraufhin eine Produkterkennungseinrichtung 95.

Die Produkterkennungseinrichtung 95 weist zunächst einen oberhalb des dritten Förderbandes 94 angeordneten Scanner 95 auf. Der Scanner 95 erkennt, wie die jeweilige von ihm gescannte Medikamentenpackung 2 auf dem dritten Förderband 94 liegt und misst Höhe, Breite und Länge der Medikamentenpackung 2.

Ferner verfährt oberhalb des dritten Förderbandes 94 wenigstens ein Sauggreifer 96. Mit dem jeweiligen Sauggreifer 96 wird jeweils eine einzelne der Medikamentenpackungen 2 erfasst, transportiert und an oder unter wenigstens ein Produkterkennungsmodul 97 gehalten. Durch das wenigstens eine Produkterkennungsmodul 97 erfolgt in der dargestellten Ausführungsform eine optische Identifizierung jeder einzelnen Medikamentenpackung 2 durch Scannen. Dabei erfolgt gleichzeitig eine Differenzierung der jeweiligen Medikamentenpackung 2 danach, ob es sich um einen sogenannten Schnelldreher oder einen sogenannten Langsamdreher handelt.

Wenn das Scannen nicht erfolgreich war, legt der Sauggreifer 96 die jeweilige Medikamentenpackung 2 beispielsweise in einem an oder neben der automatischen Einlagerungseinrichtung 9 vorgesehenen Korb oder in der Einschüttungseinheit ab.

Die derart identifizierte Medikamentenpackung 2 wird dann auf eine Ablage- und Übergabeplattform übergeben. In der gezeigten Ausführungsform weist die Ablage- und Übergabeplattform eine als Produktausgabeeinheit 98 fungierende Rutschplatte mit erhöhten Seitenrändern zum Vermeiden eines Herunterfallens von Medikamentenpackungen 2 auf.

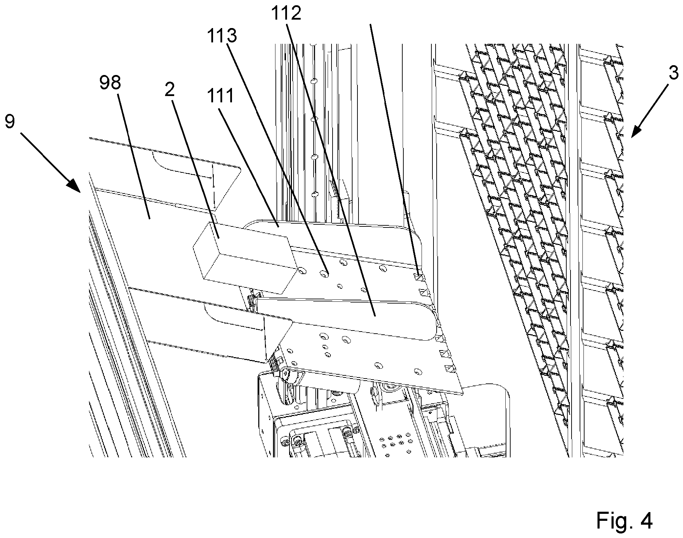

Wie es in Figur 4 zu sehen ist, kann direkt an die Rutschplatte bzw. Produktausgabeeinheit 98 eine erste Greifereinrichtung 11 heranfahren. Die erste Greifereinrichtung 11 weist einen Greifer mit seitlichen Greifbacken 111, 112 auf, die zur Aufnahme einer Medikamentenpackung 2 auf einer Aufnahmeplatte 113 des Greifers zusammenfahren und zum Abgeben der Medikamentenpackung 2 auseinanderfahren können.

In dem gezeigten Ausführungsbeispiel ist die Aufnahmeplatte 113 ausgehend von der Produktausgabeeinheit 98 nach unten geneigt. Am unteren Ende der Aufnahmeplatte 113 ist eine Anzahl von Zähnen 114 vorgesehen, die während der Aufnahme und des Transports einer Medikamentenpackung 2 auf der Aufnahmeplatte 113 nach oben ausgefahren sind. Um die Medikamentenpackung 2 nachfolgend in einen Ausgabekanal 33 des Ausgaberegals 3 abgeben zu können, werden die Zähne 114 nach unten gefahren.

Die erste Greifereinrichtung 11 ist in einer Höhenrichtung H_{A} und in einer Breitenrichtung B_{A} des Ausgaberegals 3 an einer Einlagerungsseite 31 des Ausgaberegals 3 verfahrbar. In dem gezeigten Ausführungsbeispiel ist die erste Greifereinrichtung 11 nur in diesen beiden Bewegungsrichtungen, also zweidimensional, das heißt, nicht zu der Produktausgabeeinheit 98 hin und von dieser zurück, bewegbar.

Die erste Greifereinrichtung 11 ist jedoch hinsichtlich ihrer Bewegung und Positionierung mit der Produktausgabeeinheit 98 der automatischen Einlagerungseinrichtung 9 synchronisiert. Hierfür ist sowohl die automatische Einlagerungseinrichtung 9 als auch die Greifereinrichtung 11 mit einer Steuereinrichtung 7 des Kommissioniersystems 1 verbunden.

Die erste Greifereinrichtung 11 ist vorzugsweise kipp- oder abklappbar, wodurch die Medikamentenpackungen 2 leicht in einen Ausgabekanal 33 des Ausgaberegals 3 abgegeben werden können.

Die in den Figuren nur schematisch dargestellte Steuereinrichtung 7 weist ein Eingabemodul 71 auf, in das wenigstens ein Auftrag zur Abforderung von Medikamentenpackungen 2 aus dem Kommissioniersystem 1 durch eine Bedienperson eingebbar ist.

Das Ausgaberegal 3 weist eine Mehrzahl übereinander angeordneter Ausgaberegalböden 30 auf. Die Ausgaberegalböden 30 sind jeweils von der Einlagerungsseite 31 des Ausgaberegals 3 zu der Auslagerungsseite 32 des Ausgaberegals 3 hin schräg nach unten geneigt.

Die Ausgaberegalböden 30 weisen jeweils eine Mehrzahl paralleler Ausgabekanäle 33 auf. Die jeweils von der ersten Greifereinrichtung 11 aufgenommene Medikamentenpackung 2 wird in Abhängigkeit von Steuerbefehlen der Steuereinrichtung 7 von der ersten Greifereinrichtung 11 in einen der Ausgabekanäle 33 abgegeben. In dem jeweiligen Ausgabekanal 33 rutscht die jeweilige Medikamentenpackung 2 aufgrund der Schräge des Ausgabekanals 33 nach unten in Richtung der Auslagerungsseite 32 des Ausgaberegals 3.

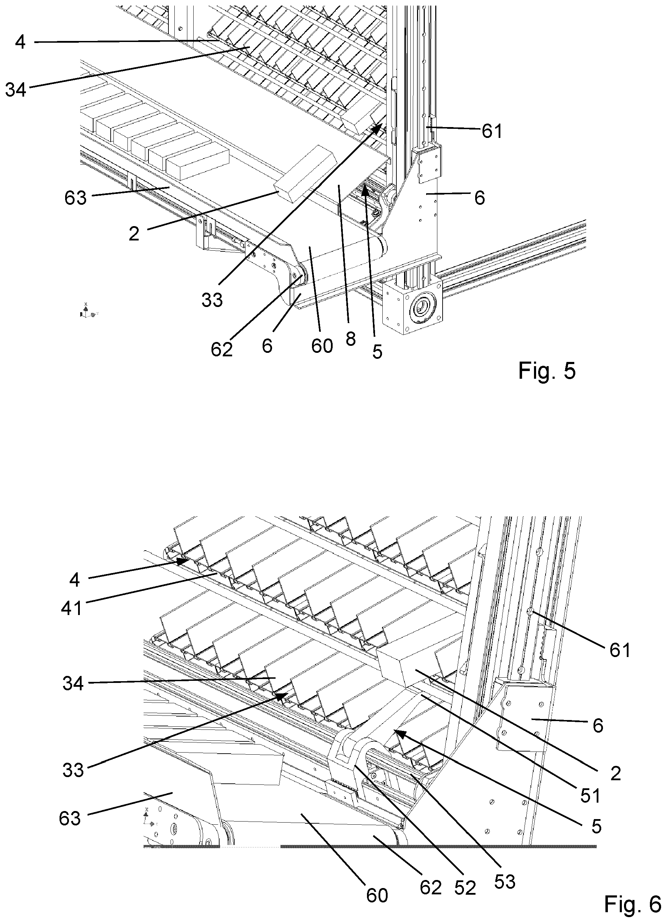

An einem auf der Auslagerungsseite 32 des Ausgaberegals 3 befindlichen Auslagerungsende des jeweiligen Ausgabekanals 33 ist eine Abrutschsperre 4 vorgesehen. In dem gezeigten Ausführungsbeispiel weist die Abrutschsperre 4, wie in Figur 6 zu sehen, einen quer zu den Ausgabekanälen 33 verlaufenden und über die jeweilige Bodenfläche der Ausgabekanäle 33 hinaus ragenden Querriegel 41 auf, kann aber in anderen Ausführungsformen der vorliegenden Erfindung auch anders, wie beispielsweise in Form einer in einem Abstand zu der Bodenfläche der Ausgabekanäle 33 angeordneten Schranke oder in Form von mehreren, aus der Bodenfläche der Ausgabekanäle 33 heraus ragenden Zähnen, ausgebildet sein.

Mit Hilfe eines an der Auslagerungsseite 32 des Ausgaberegals 3 vorgesehenen Ausgabemechanismus 5 kann die Abrutschsperre 4 geöffnet bzw. überwunden werden, sodass wenigstens eine in dem Ausgabekanal 33 befindliche Medikamentenpackung 2 aus diesem abgegeben werden kann. Der Ausgabemechanismus 5 ist mit der Steuereinrichtung 7 verbunden und wird durch diese gesteuert.

In dem gezeigten Ausführungsbeispiel weist der Ausgabemechanismus 5 einen an dem Querriegel 41 positionierbaren, vertikal bewegbaren und dadurch den Querriegel 41 von unten hintergreifenden Auswurfhebel 51 auf. Der Auswurfhebel 51 ist schwenkbar an einer Hebelhalterung 52 montiert, die auf einer längs einer Breitenrichtung B_{A} des Ausgaberegals 3 verlaufenden Schiene 53 verfahrbar ist. Die Schiene 53 ist mit der Transporteinrichtung 6 in ihrer Höhe verfahrbar.

Wie es in Figur 5 zu sehen ist, befindet sich oberhalb des Ausgabemechanismus 5 eine Abrutschplatte 8, sodass der Ausgabemechanismus 5 nicht direkt sichtbar ist. In Figur 6 ist die Abrutschplatte 8 nur zur besseren Erläuterung des Zusammenwirkens von Abrutschsperre 4 und Ausgabemechanismus 5 nicht dargestellt.

Die Abrutschplatte 8 erstreckt sich auf der Auslagerungsseite 32 vor den Auslagerungsenden in der Breitenrichtung B_{A} des Ausgaberegals 3. Sie ist von den Auslagerungsenden weg nach unten geneigt. In dem gezeigten Ausführungsbeispiel ist die Abrutschplatte 8 als ebene Platte ausgebildet, kann jedoch auch wenigstens abschnittsweise winklig und/oder gebogen ausgebildet sein. Die Abrutschplatte 8 kann beispielsweise eine Metallrutsche sein.

Eine aus einem Ausgabekanal 33 austretende Medikamentenpackung 2 rutscht auf der Abrutschplatte 8, die direkt vor dem Ausgabekanal 33 positioniert werden kann, nach unten.

Dann fällt diese Medikamentenpackung 2 auf ein vor dem unteren Ende der Abrutschplatte 8 vorgesehenes Förderband 60. Das hier verwendete Förderband 60 weist eine ebene Oberfläche auf. In bestimmten Ausführungsformen der vorliegenden Erfindung können auf dem Förderband 60 auch Stollen o. ä. vorgesehen sein, um beispielsweise bei im Querschnitt runden Medikamentenpackungen 2 deren Wegrollen zu vermeiden.

Das Förderband 60 erstreckt sich längs der Abrutschplatte 8, das heißt, in der Breitenrichtung B_{A} des Ausgaberegals 3. Das Förderband 60 verläuft horizontal, weist also keine Neigung auf. Das Förderband 60 ist in zwei Transportrichtungen T₁ und T₂ bewegbar, die gegenläufig zueinander sind. Somit kann das Förderband 60 an der Auslagerungsseite 32 des Ausgaberegals 3 hin und her verfahren werden. Zudem kann die Bewegung des Förderbandes 60 an bestimmten Stellen vor dem Ausgaberegal 3 gestoppt werden.

Das Förderband 60 ist Teil einer Transporteinrichtung 6 des Kommissioniersystems 1. Die Transporteinrichtung 6 und damit auch das Förderband 60 ist mit der Steuereinrichtung 7 gekoppelt, wodurch das Verfahren und das zwischenzeitliche Stoppen des Förderbandes 6 durch die Steuereinrichtung 7 gesteuert werden.

Die Transporteinrichtung 6 ermöglicht auch ein vertikales Verfahren des Förderbandes 60 und der an der Transporteinrichtung 6 montierten Abrutschplatte 8. Dadurch können das Förderband 60 und die Abrutschplatte 8 auf unterschiedliche Förderhöhen an der Auslagerungsseite 32 des Ausgaberegals 3 verfahren und dort positioniert werden. Entsprechend werden bei dem erfindungsgemäßen Kommissioniersystem 1 auch Medikamentenpackungen 2, die sich auf höheren Ausgaberegalböden 30 befinden, mittels der direkt davor positionierbaren Abrutschplatte 8 sanft auf das direkt neben der Abrutschplatte 8 befindliche Förderband 60 geleitet. Es gibt also bei der vorliegenden Erfindung keine hohen Abwurfhöhen für die Medikamentenpackungen 2, sodass eine Bruch- oder sonstige Zerstörungsgefahr von Medikamentenpackungen 2 weitestgehend eliminiert ist.

Das Förderband 60 ist typischerweise als Endlosschleife ausgebildet.

Dadurch dass das Förderband 60 vertikal nach oben und nach unten sowie horizontal hin und her beweglich ist, kann das Förderband 60 gesteuert von der Steuereinrichtung 7 an unterschiedliche Entnahmepositionen an dem Ausgaberegal 3 gefahren werden. Die Steuereinrichtung 7 errechnet dabei optimale Verfahrwege für die Transporteinrichtung 6, sodass in optimal kurzer Zeit auf dem Förderband 60 eine Zusammenstellung von Medikamentenpackungen 2 entsprechend einer oder mehrerer in die Steuereinrichtung 7 eingegebener Aufträge erfolgen kann. Im Ergebnis liegen die auf das Förderband 60 aus dem Ausgaberegal 3 ausgelagerten Medikamentenpackungen 2 auf dem Förderband 60 in einer einzigen Reihe, entweder direkt oder im Abstand nebeneinander. Jede der Medikamentenpackungen 2 ist dabei genau identifiziert. Das heißt, die Lage einer Medikamentenpackung 2 auf dem Förderband 60 ist also genau mit den Daten zur Identifikation der jeweiligen Medikamentenpackung 2 verknüpft. Dabei entsprechen die Anzahl, Gruppierung und Lagereihenfolge der auf dem Förderband 60 liegenden Medikamentenpackungen 2 einem Auftrag oder mehreren Aufträgen zur Abforderung von Medikamentenpackungen 2. Entsprechend werden schon auf dem Förderband 60 in optimaler Zeit und mit 100%iger Zuordnungssicherheit Gruppen von durch die Steuereinrichtung 7 abgeforderten Medikamenten zusammengestellt, die dann einer Medikamentenentnahme, beispielweise mittels wenigstens eines sich an das Förderband 60 anschließenden weiteren Förderbandes und/oder wenigstens einer Rutsche, zugeführt werden können.

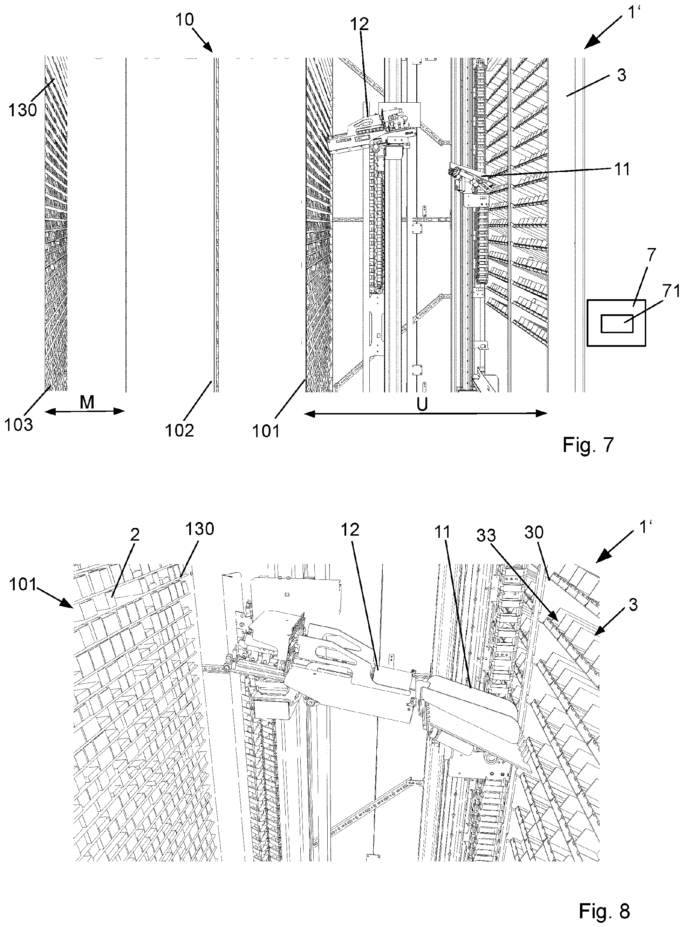

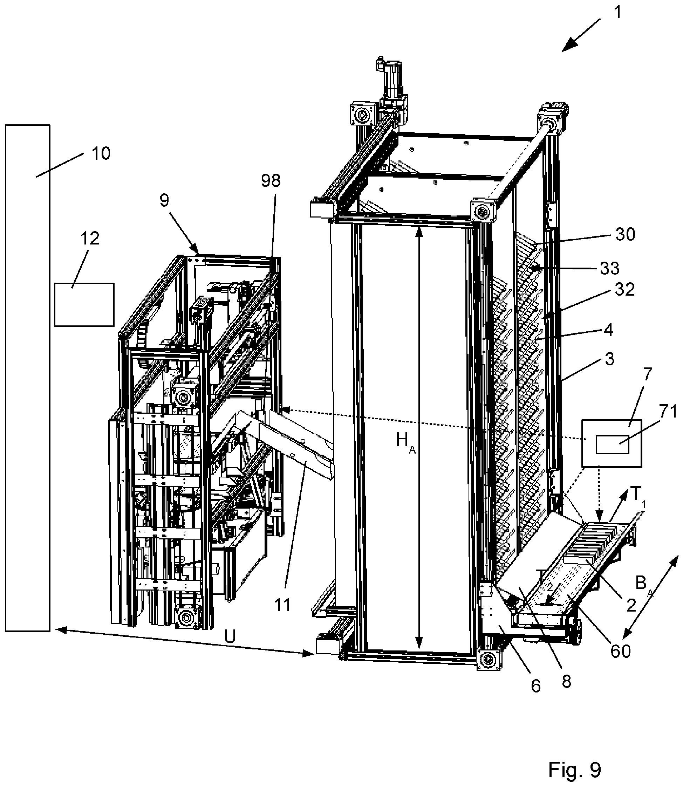

In einer in Figur 9 gezeigten Ausführungsform der vorliegenden Erfindung ist das Ausgaberegal 3 ein Regal für sogenannte Schnelldreher, das sich auf einer Seite der automatischen Einlagerungseinrichtung 9 befindet, während sich auf der anderen Seite der automatischen Einlagerungseinrichtung 9 ein Pufferregalsystem 10 befindet, das hier nur schematisch dargestellt ist, aber wie das Pufferregalsystem 10 aus Figur 7 aufgebaut ist. Das Pufferregalsystem 10 weist mehrere, parallel zueinander angeordnete und in einen Manövrierabstand M zueinander verfahrbare Einzelregale 101, 102, 103 auf. Jedes der Einzelregale 101, 102, 103 weist eine Mehrzahl übereinander angeordneter Pufferregalböden 130 auf.

Bei dieser Ausführungsform der Erfindung ist die automatische Einlagerungseinrichtung 9 in einem Übergabeabstand U zwischen dem Ausgaberegal 3 und dem Pufferregalsystem 10 angeordnet.

Wie es auch in Figur 7 zu sehen ist, ist bei dieser Ausführungsform der Erfindung eine zweite Greifereinrichtung 12 vorgesehen. Die zweite Greifereinrichtung 12 ist in einer Höhenrichtung H_{P}, einer Breitenrichtung B_{P} und einer Längenrichtung L_{P} des Pufferregalsystems 10 an und zwischen den Einzelregalen 101, 102, 103 des Pufferregalsystems 10 und innerhalb des Übergabeabstandes U verfahrbar. Die zweite Greifereinrichtung 12 ist hinsichtlich ihrer Bewegung und Positionierung mit der automatischen Einlagerungseinrichtung 9 synchronisiert.

Die zweite Greifereinrichtung 12 ist komplizierter als die erste Greifereinrichtung 11 aufgebaut, da mit ihr sowohl Ein- als auch Auslagerungen von Medikamentenpackungen 2 vorgenommen werden, während die erste Greifereinrichtung 11 eine einfache Übergabeeinrichtung ist.

Bei dieser Ausführungsform der Erfindung wird in der automatischen Einlagerungseinrichtung 9 mittels der darin vollzogenen Produkterkennung eine Einordnung der Medikamentenpackungen 2 in sogenannte Schnelldreher und sogenannte Langsamdreher vorgenommen. Die Schnelldreher werden über die erste Greifereinrichtung 11 in das Ausgaberegal 3 abgegeben, während die Langsamdreher über die zweite Greifereinrichtung 12 in das Pufferregalsystem 10 abgegeben werden.

Das Ausgaberegal 3 befindet sich dabei an einer vorderen, näher an der Medikamentenentnahme des Kommissioniersystems befindlichen Position, während das Pufferregalsystem 10 weiter entfernt von der Medikamentenentnahme des Kommissioniersystems angeordnet ist. Durch diese Ausführungsform der Erfindung wird das Ausgaberegal 3, das aufgrund der Schnelldreher schnell entleert wird, in optimaler Zeit wieder befüllt. Das Pufferregalsystem 10 kann hingegen durch die zweite Greifereinrichtung 12, die sich in drei Dimensionen bewegt und relativ lange Wege innerhalb des Übergabeabstandes U, entlang der Einzelregale 101, 102, 103 sowie in den zwischen den Einzelregalen 101, 102, 103 ausgebildeten Manövrierabständen M zurücklegen muss, langsamer befüllt werden.

Ferner können bei dieser Ausführungsform der Erfindung bei einem Auftrag durch die zweite Greifereinrichtung 12 Langsamdreher über die automatische Einlagerungseinrichtung 9 an das Ausgaberegal 3 gegeben und durch diese an die Medikamentenentnahme des Kommissioniersystems abgegeben werden.

Die Produktausgabeeinheit 98 der automatischen Einlagerungseinrichtung 9 weist bei dieser Ausführungsform der Erfindung zwei oder drei Platten auf. Eine dieser Platten ist eine Übergabeplatte für die zweite Greifereinrichtung 12, also den Automatengreifer. Eine weitere dieser Platten ist ein Teller, der direkt Medikamentenpackungen 2 in das als Schnelldrehregal fungierende Ausgaberegal 3 abfüllt. Dieser Teller muss zu keinem Zeitpunkt warten, kann also ständig Medikamentenpackungen 2 aufnehmen und damit das Ausgaberegal 3 befüllen. Eine dritte der Platten kann als weiter Übergabeplatte für die zweite Greifereinrichtung 12 fungieren, sodass ein zu der Produktausgabeeinheit 98 der automatischen Einlagerungseinrichtung 9 führendes Förderband nicht stoppen muss, wenn die zweite Greifereinrichtung 12 noch wegen einer Medikamentenpackungseinlagerung unterwegs ist.

Noch eine weitere Ausführungsform eines erfindungsgemäßen Kommissioniersystems 1' ist ausschnittweise in den Figuren 7 und 8 gezeigt.

Das Kommissioniersystem 1' weist ein Pufferregalsystem 10 mit einer dieses bedienenden zweiten Greifereinrichtung 12 sowie ein Ausgaberegal 3 mit einer dieses bedienenden ersten Greifereinrichtung 11 auf.

Das Pufferregalsystem 10 weist mehrere, parallel zueinander angeordnete und in einen Manövrierabstand M zueinander verfahrbare Einzelregalen 101, 102, 103 auf. Jedes der Einzelregale 101, 102, 103 weist eine Mehrzahl übereinander angeordneter Pufferregalböden 130 auf.

Die zweite Greifereinrichtung 12 ist in einer Höhenrichtung H_{P}, einer Breitenrichtung B_{P} und einer Längenrichtung L_{P} des Pufferregalsystems 10 an und zwischen den Einzelregalen 101, 102, 103 des Pufferregalsystems 10 und innerhalb eines zwischen dem Pufferregalsystem 10 und dem Ausgaberegals 3 bestehenden Übergabeabstandes U verfahrbar.

Das Ausgaberegal 3 weist eine Mehrzahl übereinander angeordneter Ausgaberegalböden 30 auf. Die Ausgaberegalböden 30 sind jeweils von einer Einlagerungsseite 31 des Ausgaberegals 3 zu einer Auslagerungsseite 32 des Ausgaberegals 3 hin schräg nach unten geneigt. Die Ausgaberegalböden 30 weisen jeweils eine Mehrzahl paralleler Ausgabekanäle 33 auf.

Die erste Greifereinrichtung 11 ist in einer Höhenrichtung H_{A} und in einer Breitenrichtung B_{A} des Ausgaberegals 3 an der Einlagerungsseite 31 des Ausgaberegals 3 verfahrbar. In dem gezeigten Ausführungsbeispiel ist die erste Greifereinrichtung 11 nur in diesen beiden Bewegungsrichtungen, also zweidimensional, das heißt, nicht zu dem Pufferregalsystem 10 hin und/oder von diesem zurück, bewegbar. Die erste Greifereinrichtung 11 ist jedoch hinsichtlich ihrer Bewegung und Positionierung mit der zweiten Greifereinrichtung 12 synchronisiert. Hierfür sind sowohl die erste Greifereinrichtung 11 als auch die zweite Greifereinrichtung 12 mit einer Steuereinrichtung 7 des Kommissioniersystems 1' verbunden. Die zweite Greifereinrichtung 12 ist hinsichtlich ihrer Bewegung und Positionierung mit der ersten Greifereinrichtung 11 synchronisiert.

Die erste Greifereinrichtung 11 kann von der zweiten Greifereinrichtung 12, die Medikamentenpackungen 2 in das Pufferregalsystem 10 einlagern, aber auch aus diesem entnehmen kann, jeweils wenigstens eine Medikamentenpackung 2 aufnehmen und diese daraufhin in einen Ausgabekanal 33 des Ausgaberegals 3 abgeben, aus welchem wiederum eine Abgabe der jeweiligen Medikamentenpackun(en) 2 an eine Medikamentenentnahme des Kommissioniersystems 1' erfolgen kann.

Hierbei wird die jeweils mittels der ersten Greifereinrichtung 11 von der zweiten Greifereinrichtung 12 aufgenommene Medikamentenpackung 2 in Abhängigkeit von Steuerbefehlen der Steuereinrichtung 7 von der ersten Greifereinrichtung 11 in einen der Ausgabekanäle 33 abgegeben. In dem jeweiligen Ausgabekanal 33 rutscht die jeweilige Medikamentenpackung 2 aufgrund der Schräge des Ausgabekanals 33 nach unten in Richtung der Auslagerungsseite 32 des Ausgaberegals 3.

Jeweils an einem Auslagerungsende der jeweiligen Ausgabekanäle 33 befindet sich eine Abrutschsperre 4. Wie in Figur 6 zu sehen, kann die Abrutschsperre 4 einen quer zu den Ausgabekanälen 33 verlaufenden und über die jeweilige Bodenfläche der Ausgabekanäle 33 hinaus ragenden Querriegel 41 aufweisen, kann aber in anderen Ausführungsformen der vorliegenden Erfindung auch anders, wie beispielsweise in Form einer in einem Abstand zu der Bodenfläche der Ausgabekanäle 33 angeordneten Schranke oder in Form von mehreren, aus der Bodenfläche der Ausgabekanäle 33 heraus ragenden Zähnen, ausgebildet sein.

Mit Hilfe eines an der Auslagerungsseite 32 des Ausgaberegals 3 vorgesehenen Ausgabemechanismus 5 kann die Abrutschsperre 4 geöffnet bzw. überwunden werden, sodass wenigstens eine in dem Ausgabekanal 33 befindliche Medikamentenpackung 2 aus diesem abgegeben werden kann. Der Ausgabemechanismus 5 ist mit der Steuereinrichtung 7 verbunden und wird durch diese gesteuert.

Der Ausgabemechanismus 5 kann beispielsweise, wie in Figur 6 zu sehen, einen an dem Querriegel 41 positionierbaren, vertikal bewegbaren und dadurch den Querriegel 41 hintergreifenden Auswurfhebel 51 aufweisen. Der Auswurfhebel 51 ist schwenkbar an einer Hebelhalterung 52 montiert, die auf einer längs einer Breitenrichtung B_{A} des Ausgaberegals 3 verlaufenden Schiene 53 verfahrbar ist.

An den jeweiligen Ausgabekanal 33 schließt sich eine in Figur 7 und 8 nicht gezeigte schräge Abrutschplatte 8 an, die wie in Figur 5 gezeigt ausgebildet sein kann. Die Abrutschplatte 8 erstreckt sich auf der Auslagerungsseite 32 vor den Auslagerungsenden in der Breitenrichtung B_{A} des Ausgaberegals 3. Sie ist von den Auslagerungsenden weg nach unten geneigt. In Figur 5 ist die Abrutschplatte 8 als ebene Platte ausgebildet, kann jedoch auch wenigstens abschnittsweise winklig und/oder gebogen ausgebildet sein.

An einem unteren Ende der Abrutschplatte 8 ist, wie in Figur 5 zu sehen, ein Förderband 60 angeordnet. Das Förderband 60 erstreckt sich längs der Abrutschplatte 8, das heißt, in der Breitenrichtung B_{A} des Ausgaberegals 3. Das Förderband 60 verläuft horizontal, weist also keine Neigung auf. Das Förderband 60 ist in zwei Transportrichtungen T₁ und T₂ bewegbar, die gegenläufig zueinander sind. Somit kann das Förderband 60 an der Auslagerungsseite 32 des Ausgaberegals 3 hin und her verfahren werden. Zudem kann die Bewegung des Förderbandes 60 an bestimmten Stellen vor dem Ausgaberegal 3 gestoppt werden.

Das Förderband 60 ist Teil einer Transporteinrichtung 6 des Kommissioniersystems 1'. Die Transporteinrichtung 6 und damit auch das Förderband 60 ist mit der Steuereinrichtung 7 gekoppelt, wodurch das Verfahren und das zwischenzeitliche Stoppen des Förderbandes 6 durch die Steuereinrichtung 7 gesteuert werden.

Die Transporteinrichtung 6 ermöglicht auch ein vertikales Verfahren des Förderbandes 60 und der an der Transporteinrichtung 6 montierten Abrutschplatte 8. Dadurch können das Förderband 60 und die Abrutschplatte 8 auf unterschiedliche Förderhöhen an der Auslagerungsseite 32 des Ausgaberegals 3 verfahren und dort positioniert werden. Entsprechend werden bei dem erfindungsgemäßen Kommissioniersystem 1' auch Medikamentenpackungen 2, die sich auf höheren Ausgaberegalböden 30 befinden, mittels der direkt davor positionierbaren Abrutschplatte 8 sanft auf das direkt neben der Abrutschplatte 8 befindliche Förderband 60 geleitet. Es gibt also auch bei dieser Ausführungsform der vorliegenden Erfindung keine hohen Abwurfhöhen für die Medikamentenpackungen 2, sodass eine Bruch- oder sonstige Zerstörungsgefahr von Medikamentenpackungen 2 weitestgehend eliminiert ist.

Dadurch, dass das Förderband 60 vertikal nach oben und nach unten sowie horizontal hin und her beweglich ist, kann das Förderband 60 gesteuert von der Steuereinrichtung 7 an unterschiedliche Entnahmepositionen an dem Ausgaberegal 3 gefahren werden. Die Steuereinrichtung 7 errechnet dabei optimale Verfahrwege für die Transporteinrichtung 6, sodass in optimal kurzer Zeit auf dem Förderband 60 eine Zusammenstellung von Medikamentenpackungen 2 entsprechend einer oder mehrerer in die Steuereinrichtung 7 eingegebener Aufträge erfolgen kann. Im Ergebnis liegen die auf das Förderband 60 aus dem Ausgaberegal 3 ausgelagerten Medikamentenpackungen 2 auf dem Förderband 60 in einer einzigen Reihe, entweder direkt oder im Abstand nebeneinander. Jede der Medikamentenpackungen 2 ist dabei genau identifiziert. Das heißt, die Lage einer Medikamentenpackung 2 auf dem Förderband 60 ist also genau mit den Daten zur Identifikation der jeweiligen Medikamentenpackung 2 verknüpft. Dabei entsprechen die Anzahl, Gruppierung und Lagereihenfolge der auf dem Förderband 60 liegenden Medikamentenpackungen 2 einem Auftrag oder mehreren Aufträgen zur Abforderung von Medikamentenpackungen 2. Entsprechend werden schon auf dem Förderband 60 in optimaler Zeit und mit 100%iger Zuordnungssicherheit Gruppen von durch die Steuereinrichtung 7 abgeforderten Medikamenten zusammengestellt, die dann einer Medikamentenentnahme, beispielweise mittels wenigstens eines sich an das Förderband 60 anschließenden weiteren Förderbandes und/oder wenigstens einer Rutsche, zugeführt werden können.

Bei dem Kommissioniersystem 1' wird das Pufferregalsystem 10 in erster Linie nur mit sogenannten Langsamdrehern bestückt. Das Ausgaberegal 3 wird mit sogenannten Schnelldrehern sowie den in einem oder mehreren aktuellen, in die Steuereinrichtung 7 eingegebenen Aufträgen enthaltenen und durch die zweite Greifereinrichtung 12 aus dem Pufferreggalsystem 10 abgeholten und der ersten Greifereinrichtung 11 übergebenen Medikamentenpackungen 2 bestückt. Somit wird eine besonders schnelle Auslagerung von Medikamentenpackungen 2 bei gleichzeitiger Einlagerung von Medikamentenpackungen 2 ermöglicht.

Alle Ausführungsformen der vorliegenden Erfindung ermöglichen es, mehrere Medikamentenpackungen 2 gebündelt auszulagern, wobei die in dem jeweiligen Bündel enthaltenen Medikamentenpackungen 2 nachfolgend getrennten Förderwegen zugeleitet werden können. Dies ist dadurch möglich, weil bei der vorliegenden Erfindung jede Medikamentenpackung 2 nicht nur hinsichtlich ihres Inhaltes, sondern auch hinsichtlich ihrer jeweiligen Position auf dem gesamten Förderweg nach der Produktvereinzelung und Produkterkennung identifiziert ist und auch bleibt.

Der sich jeweils an das in jeder Ausführungsform der Erfindung verwendete Ausgaberegal 3 anschließende Förderweg kann ein oder mehrere Förderbänder und/oder ein oder mehrere Weichen und/oder ein oder mehrere Rutschen oder Lifte aufweisen.

Ein oder mehrere Weichen können sinnvoll sein, wenn die Medikamentenpackungen z. B. in einer Apotheke an unterschiedliche Kassen geliefert werden sollen.

Kommt wenigstens eine Weiche zum Einsatz, ist es sinnvoll, wenn die Medikamentenpackungen auf dem jeweiligen Förderweg einen Abstand in Abhängigkeit von der Schaltzeit der jeweiligen Weiche haben.

Alle Ausführungsformen der vorliegenden Erfindung eignen sich zudem für die Einlagerung und Auslagerung von nicht gleichartigen Medikamentenpackungen.

Alle Ausführungsformen der vorliegenden Erfindung ermöglichen ferner einen nicht gleichzeitigen Transport von Medikamentenpackungen.

In besonderen Lastzeiten der Kommissioniersysteme 1, 1' sind sowohl die erste Greifereinrichtung 11 als auch die zweite Greifereinrichtung 12 mit dem Auslagern von Medikamentenpackungen 2 beschäftigt. Das Einlagern von Medikamentenpackungen 2 ist zeitaufwändiger als das Auslagern. Bei dem erfindungsgemäßen Kommissioniersystem 1, 1' kann jedoch der Einlagerungsprozess von dem Auslagerungsprozess entkoppelt werden.

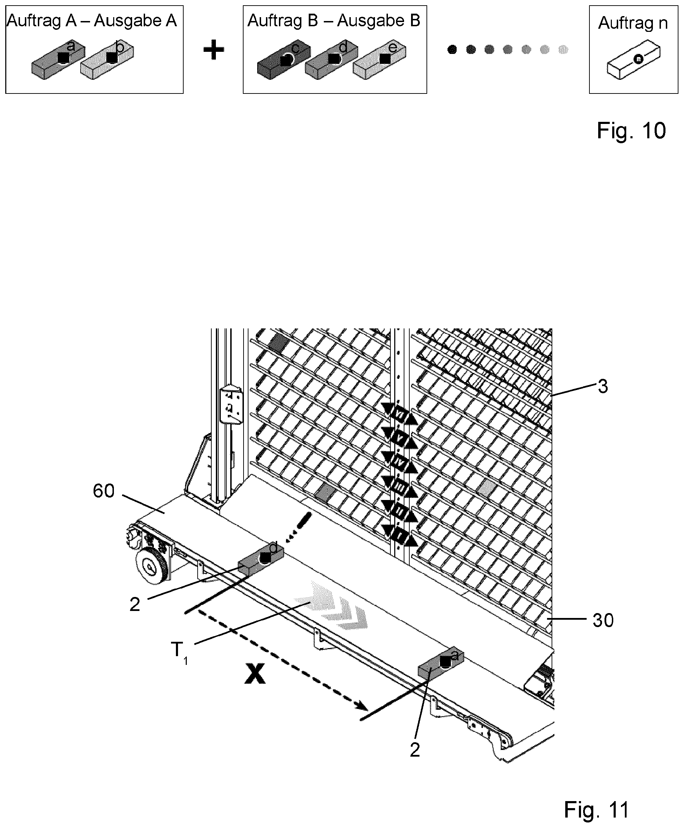

Die Figuren 10 bis 13 zeigen beispielhaft für unterschiedliche Ausführungsformen des erfindungsgemäßen Kommissionierverfahrens schematisch eine Verfahrensweise bei zwei in ein erfindungsgemäßes Kommissioniersystem 1, 1' eingegebenen Aufträgen. Im Auftrag A sollen zwei unterschiedliche Medikamentenpackungen 2 zu einer Ausgabe A geliefert werden. Im Auftrag B sollen drei unterschiedliche Medikamentenpackungen 2 zu einer Ausgabe B geliefert werden.

Figur 11 zeigt schematisch erste Schritte eines möglichen Auslagerungsablaufs bei dem erfindungsgemäßen Kommissionierverfahren. Dabei wird zunächst eine Medikamentenpackung 2a aus einem Ausgaberegalboden 30l auf das Förderband 60 ausgegeben. Das Förderband 60 fährt daraufhin einen Weg X in der horizontalen Transportrichtung T₁, also hier nach rechts, und stoppt dort kurz. Danach wird eine Medikamentenpackung 2d aus dem Ausgaberegalboden 30l im Abstand X zu der Medikamentenpackung 2a auf das Förderband 60 ausgegeben.

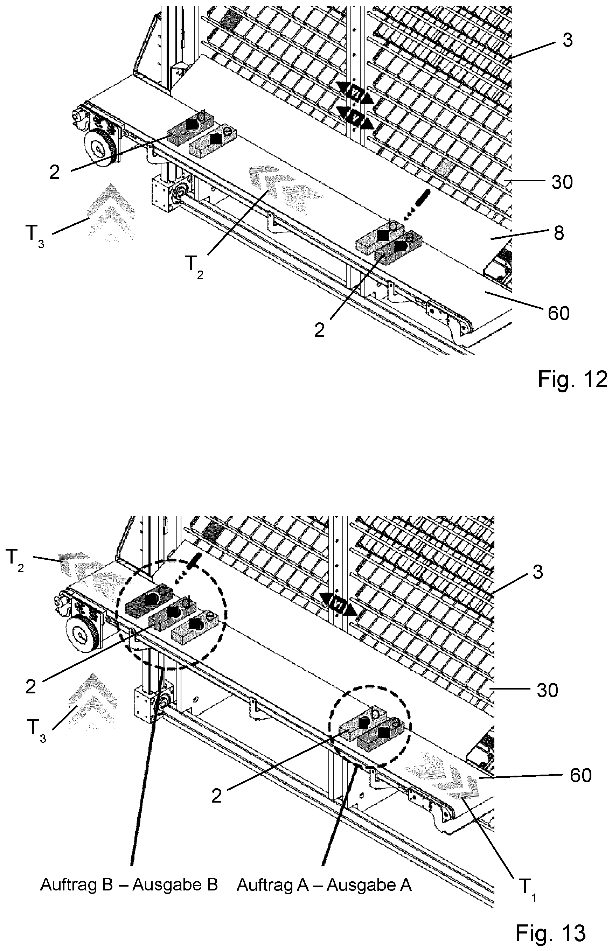

Wie in Figur 12 zu sehen, wird nachfolgend das Förderband 60 in der vertikalen Transportrichtung T₃ an dem Ausgaberegal 3 nach oben gefahren, in dem Beispiel bis zu dem Ausgaberegalboden 30V, und dort angehalten. Hier erfolgt eine Ausgabe einer Medikamentenpackung 2e aus dem Ausgaberegalboden 30V auf das Förderband 60. Danach wird das Förderband 60 mit den darauf liegenden Medikamentenpackungen 2a, 2d, 2e in der horizontalen Transportrichtung T₂, also hier nach links, bewegt und in dieser Position kurz gestoppt. In dieser Position wird aus dem Ausgaberegalboden 30V eine Medikamentenpackung 2b auf das Förderband 60 abgegeben.

Wie in Figur 13 dargestellt, fährt daraufhin das Förderband 60 auf die Ebene eines Ausgaberegalbodens 30VI des Ausgaberegals 3 und stoppt dort. Auf dieser Förderhöhe erfolgt eine Ausgabe einer Medikamentenpackung 2c aus dem Ausgaberegalbodens 30VI auf das Förderband 60. Die dem Auftrag A zugehörigen Medikamentenpackungen 2a, 2b werden daraufhin durch das Förderband 60 in der Transportrichtung T₁, also hier nach rechts, zu einer Ausgabe A, wie beispielsweise einer ersten Kasse einer Apotheke, abtransportiert. Die dem Auftrag B zugehörigen Medikamentenpackungen 2c, 2d, 2e werden danach durch das Förderband 60 in der Transportrichtung T₂, also hier nach links, zu einer Ausgabe B, wie beispielsweise einer zweiten Kasse einer Apotheke, abtransportiert.

## Patentansprüche

1. Kommissioniersystem (1, 1') zur Einlagerung und Auslagerung von Medikamentenpackungen (2), wobei das Kommissioniersystem (1, 1') ein Ausgaberegal (3) mit einer Mehrzahl übereinander angeordneter Ausgaberegalböden (30), die von einer Einlagerungsseite (31) des Ausgaberegals (3) zu einer Auslagerungsseite (32) des Ausgaberegals (3) hin schräg nach unten geneigt sind und jeweils eine Mehrzahl paralleler Ausgabekanäle (33) aufweisen, wobei jeweils an einem auf der Auslagerungsseite (32) des Ausgaberegals (3) befindlichen Auslagerungsende des jeweiligen Ausgabekanals (33) eine Abrutschsperre (4) vorgesehen ist; einen Ausgabemechanismus (5), mit dem die Abrutschsperre (4) öffenbar oder überwindbar ist; eine in einer Breitenrichtung (B_{A}) des Ausgaberegals (3) an dessen Auslagerungsseite (32) verlaufende und ein horizontal bewegbares Förderband (60) aufweisende Transporteinrichtung (6) und eine den Ausgabemechanismus (5) steuernde Steuereinrichtung (7) mit einem Eingabemodul (71), in das wenigstens ein Auftrag zur Abforderung von Medikamentenpackungen (2) aus dem Kommissioniersystem (1, 1') eingebbar ist, aufweist,
wobei
eine sich auf der Auslagerungsseite (32) vor den Auslagerungsenden in der Breitenrichtung (B_{A}) des Ausgaberegals (3) erstreckende und von den Auslagerungsenden weg nach unten geneigte Abrutschplatte (8) angeordnet ist, wobei die von der Steuereinrichtung gesteuerte Transporteinrichtung (6) sich längs der Abrutschplatte (8) erstreckt und mit dem Förderband (60) und der Abrutschplatte (8) an der Auslagerungsseite (32) des Ausgaberegals (3) vertikal verfahrbar ist, wodurch das Förderband (60) in unterschiedlichen Förderhöhen positionierbar ist,
**dadurch gekennzeichnet, dass**
das Förderband (60) in den unterschiedlichen Förderhöhen horizontal in entgegengesetzten Transportrichtungen (T₁, T₂) durch die Steuereinrichtung (7) derart sowohl hin und her verfahrbar als auch für eine Auslagerung wenigstens einer Medikamentenpackung (2) vor wenigstens einem Auslagerungsende temporär stoppbar ist, dass die auf das Förderband (60) ausgelagerten Medikamentenpackungen (2) auf dem Förderband (60) in einer einzigen Reihe nebeneinander liegen und die Anzahl, Gruppierung und Lagereihenfolge dieser Medikamentenpackungen (2) auf dem Förderband (60) dem wenigstens einen Auftrag zur Abforderung von Medikamentenpackungen (2) entspricht.

2. Kommissioniersystem (1, 1') nach Anspruch 1, **dadurch gekennzeichnet, dass** die Abrutschsperre (4) einen an dem Auslagerungsende des jeweiligen Ausgaberegalbodens (30) angeordneten Querriegel (41) und der Ausgabemechanismus (5) einen hinter dem Querriegel (41) positionierbaren, vertikal bewegbaren und dabei den Querriegel (41) von unten hintergreifenden Auswurfhebel (51) aufweist.

3. Kommissioniersystem (1, 1') nach Anspruch 2, **dadurch gekennzeichnet, dass** der Auswurfhebel (51) schwenkbar an einer Hebelhalterung (52) montiert ist, die auf einer längs der Breitenrichtung (B_{A}) des Ausgaberegals (3) verlaufenden und an der Transporteinrichtung (6) montierten Schiene (53) unterhalb des Förderbandes (60) verfahrbar ist.

4. Kommissioniersystem (1, 1') nach einem der vorhergehenden Ansprüche, **dadurch gekennzeichnet, dass** das Kommissioniersystem (1) auf der Einlagerungsseite (31) des Ausgaberegals (3) eine automatische Einlagerungseinrichtung (9), die Produktvereinzelungselemente und eine Produkterkennungseinrichtung aufweist, und eine in einer Höhenrichtung (H_{A}) und in der Breitenrichtung (B_{A}) des Ausgaberegals (3) an dem Ausgaberegal (3) verfahrbare und hinsichtlich ihrer Bewegung und Positionierung mit einer Produktausgabeeinheit (98) der automatischen Einlagerungseinrichtung (9) synchronisierte erste Greifereinrichtung (11) aufweist.

5. Kommissioniersystem (1, 1') nach Anspruch 4, **dadurch gekennzeichnet, dass** das Kommissioniersystem (1) ein gegenüber dem Ausgaberegal (3) angeordnetes Pufferregalsystem (10) mit wenigstens zwei parallel zueinander angeordneten und einen Manövrierabstand (M) zueinander aufweisenden oder in den Manövrierabstand (M) zueinander verfahrbaren Einzelregalen (101, 102, 103), wobei jedes der Einzelregale (101, 102, 103) eine Mehrzahl übereinander angeordneter Pufferregalböden (130) aufweist, wobei die automatische Einlagerungseinrichtung (9) in einem Übergabeabstand (U) zwischen dem Ausgaberegal (3) und dem Pufferregalsystem (10) angeordnet ist, und eine in einer Höhenrichtung (H_{P}), einer Breitenrichtung (B_{P}) und einer Längenrichtung (L_{P}) des Pufferregalsystems (10) an und zwischen den Einzelregalen (101, 102, 103) des Pufferregalsystems (10) und innerhalb des Übergabeabstandes (U) verfahrbare, hinsichtlich ihrer Bewegung und Positionierung mit der automatischen Einlagerungseinrichtung (9) synchronisierte zweite Greifereinrichtung (12) aufweist.

6. Kommissioniersystem (1, 1') nach einem der Ansprüche 1 bis 3, **dadurch gekennzeichnet, dass** das Kommissioniersystem (1') ein der Einlagerungsseite (31) des Ausgaberegals (3) in einem Übergabeabstand (U) gegenüber angeordnetes Pufferregalsystem (10) mit wenigstens zwei parallel zueinander angeordneten und einen Manövrierabstand (M) zueinander aufweisenden oder in den Manövrierabstand (M) zueinander verfahrbaren Einzelregalen (101, 102, 103), wobei jedes der Einzelregale (101, 102) eine Mehrzahl übereinander angeordneter Pufferregalböden (130) aufweist; eine in einer Höhenrichtung (H_{A}) und der Breitenrichtung (B_{A}) des Ausgaberegals (3) an dem Ausgaberegal (3) verfahrbare erste Greifereinrichtung (11) und eine in einer Höhenrichtung (H_{P}), einer Breitenrichtung (B_{P}) und einer Längenrichtung (L_{P}) des Pufferregalsystems (10) an und zwischen den Einzelregalen (101, 102, 103) des Pufferregalsystems und innerhalb des Übergabeabstandes (U) verfahrbare und hinsichtlich ihrer Bewegung und Positionierung auf die erste Greifereinrichtung (11) synchronisierte zweite Greifereinrichtung (12) aufweist.

7. Kommissionierverfahren zur Einlagerung und Auslagerung von Medikamentenpackungen (2), bei dem in einem Kommissioniersystem (1, 1') die Medikamentenpackungen (2) in mehreren übereinander angeordneten Ausgaberegalböden (30) eines Ausgaberegals (3) gelagert werden, wobei sie nach Eingabe in das Ausgaberegal (3) jeweils in einem Ausgabekanal (33) des Ausgaberegals (3) von einer Einlagerungsseite (31) des Ausgaberegals (3) zu einer Auslagerungsseite (32) des Ausgaberegals (3) hin nach unten bis zu einer Abrutschsperre (4) rutschen, und wobei zur Ausgabe der jeweiligen Medikamentenpackung (2) aus dem Ausgaberegal (3) mit einem auf der Auslagerungsseite (32) des Ausgaberegals (3) befindlichen, durch eine Steuereinrichtung (7) gesteuerten Ausgabemechanismus (5) die Abrutschsperre (4) überwunden wird; wobei die aus dem Ausgaberegal (3) ausgelagerten Medikamentenpackungen (2) auf einer Auslagerungsseite (32) des Ausgaberegals (3) auf ein Förderband (60) rutschen und von dem Förderband (60) abtransportiert werden, und wobei in die Steuereinrichtung (7) mit einem Eingabemodul (71) wenigstens ein Auftrag zur Abforderung von Medikamentenpackungen (2) aus dem Kommissioniersystem (1, 1') eingegeben wird,
wobei
die aus dem Ausgaberegal (3) austretenden Medikamentenpackungen (2) über eine davor befindliche Abrutschplatte (8) auf das Förderband (60) rutschen und das Förderband (60) mit der Abrutschplatte (8) an der Auslagerungsseite (32) des Ausgaberegals (3) vertikal zur Aufnahme von Medikamentenpackungen (2) verfahren wird, wobei das Förderband (60) in unterschiedlichen Förderhöhen positioniert wird,
**dadurch gekennzeichnet, dass**
das Förderband (60) in den unterschiedlichen Förderhöhen horizontal in entgegengesetzten Transportrichtungen (T₁, T₂) durch die Steuereinrichtung (7) derart hin und her verfahren als auch für eine Auslagerung wenigstens einer Medikamentenpackung (2) vor wenigstens einem Auslagerungsende temporär gestoppt wird, sodass die auf das Förderband (60) ausgelagerten Medikamentenpackungen (2) auf dem Förderband (60) in einer einzigen Reihe nebeneinander liegen und die Anzahl, Gruppierung und Lagereihenfolge dieser Medikamentenpackungen (2) auf dem Förderband (60) dem wenigstens einen Auftrag zur Abforderung von Medikamentenpackungen (2) entspricht.

## Claims

1. An order picking system (1, 1') for storing and retrieving medicament packages (2), wherein the order picking system (1, 1') comprises a dispensing rack (3) having a plurality of dispensing shelves (30) arranged one above the other, which dispensing shelves are inclined downward from a storage side (31) of the dispensing rack (3) toward a retrieval side (32) of the dispensing rack (3) and each has a plurality of parallel dispensing ducts (33), wherein a sliding barrier (4) is provided in each case on a retrieval end located on the retrieval side (32) of the dispensing rack (3) of the corresponding dispensing duct (33); a dispensing mechanism (5) with which the sliding barrier (4) can be opened or overcome; a transport device (6) running in a width direction (B_{A}) of the dispensing rack (3) on the retrieval side (32) thereof and having a horizontally movable conveyor belt (60), and a control device (7) controlling the dispensing mechanism (5) and having an input module (71) into which at least one order for requesting medicament packages (2) from the order picking system (1, 1') can be input,
wherein a sliding plate (8) is arranged, which sliding plate extends on the retrieval side (32) in front of the retrieval ends and which is inclined downward away from the retrieval ends in the width direction (B_{A}) of the dispensing rack (3), wherein the transport device (6) controlled by the control device extends along the sliding plate (8) and can be displaced vertically on the retrieval side (32) of the dispensing rack (3) by means of the conveyor belt (60) and the sliding plate (8), as a result of which the conveyor belt (60) can be positioned at different conveying heights, **characterized in that** the conveyor belt (60) can be displaced back and forth horizontally at the different conveying heights in opposite transport directions (T₁, T₂) by means of the control device (7) and can also be stopped temporarily in front of at least one retrieval end in order to remove at least one medicament package (2), **in that** the medicament packages (2) dispensed to the conveyor belt (60) lie next to one another in a single row on the conveyor belt (60), and **in that** the number, grouping, and positional sequence of these medicament packages (2) on the conveyor belt (60) correspond to the at least one order for requesting medicament packages (2).

2. The order picking system (1, 1') according to claim 1, **characterized in that** the sliding barrier (4) has a cross bar (41) arranged at the retrieval end of the corresponding dispensing shelf (30), and **in that** the dispensing mechanism (5) has a vertically movable ejection lever (51) which can be positioned behind the cross bar (41) and thereby engages behind the cross bar (41) from below.

3. The order picking system (1, 1') according to claim 2, **characterized in that** the ejection lever (51) is pivotably mounted on a lever bracket (52) which can be displaced below the conveyor belt (60) on a rail (53) extending along a width direction (B_{A}) of the dispensing rack (3) and mounted on the transport device (6).

4. The order picking system (1, 1') according to one of the preceding claims, **characterized in that** the order picking system (1) comprises an automatic storage device (9) on the storage side (31) of the dispensing rack (3), the storage device having product separating elements and a product recognition device; and a first gripper device (11) which can be displaced on the dispensing rack (3) in a height direction (H_{A}) and in the width direction (B_{A}) of the dispensing rack (3) and is synchronized with a product dispensing unit (98) of the automatic storage device (9) in terms of the movement and positioning thereof.

5. The order picking system (1, 1') according to claim 4, **characterized in that** the order picking system (1) comprises a buffer rack system (10) arranged opposite the dispensing rack (3), the buffer rack system having at least two individual shelves (101, 102, 103) which are arranged parallel to one another and have a maneuvering distance (M) from one another or can be displaced at the maneuvering distance (M) relative to one another, wherein each of the individual shelves (101, 102, 103) comprises a plurality of buffer shelves (130) arranged one above the other, wherein the automatic storage device (9) is arranged at a transfer distance (U) between the dispensing rack (3) and the buffer rack system (10); and a second gripper device (12) which can be displaced in a height direction (H_{P}), a width direction (B_{P}), and a length direction (L_{P}) of the buffer rack system (10) on and between the individual shelves (101, 102, 103) of the buffer rack system (10) within the transfer distance (U) and which is synchronized with the automatic storage device (9) in terms of the movement and positioning thereof.

6. The order picking system (1, 1') according to one of claims 1 to 3, **characterized in that** the order picking system (1') comprises a buffer rack system (10) arranged opposite the storage side (31) of the dispensing rack (3) at a transfer distance (U), the buffer rack system having at least two individual shelves (101, 102, 103) which are arranged parallel to one another and have a maneuvering distance (M) from one another or can be displaced at the maneuvering distance (M) relative to one another, wherein each of the individual shelves (101, 102) comprises a plurality of buffer shelves (130) arranged one above the other; a first gripper device (11) which can be displaced on the dispensing rack (3) in a height direction (H_{A}) and width direction (B_{A}) of the dispensing rack (3) and a second gripper device (12) which can be displaced in a height direction (H_{P}), a width direction (B_{P}), and a length direction (L_{P}) of the buffer rack system (10) on and between the individual shelves (101, 102, 103) of the buffer rack system within the transfer distance (U) and which is synchronized with the first gripper device (11) in terms of the movement and positioning thereof.

7. Order picking method for storing and retrieving medicament packages (2), wherein the medicament packages (2) are stored in an order picking system (1, 1') in a plurality of dispensing shelves (30) of a dispensing rack (3) arranged one above the other, wherein, after being placed on the dispensing rack (3), said medicament packages slide down in a dispensing duct (33) of the dispensing rack (3) from a storage side (31) of the dispensing rack (3) to a retrieval side (32) of the dispensing rack (3) up to a sliding barrier (4), and wherein the sliding barrier (4) is overcome by means of a dispensing mechanism (5) located on the retrieval side (32) of the dispensing rack (3) and controlled by a control device (7) in order to dispense the corresponding medicament package (2) from the dispensing rack (3); wherein the medicament packages (2) dispensed from the dispensing rack (3) slide onto a conveyor belt (60) on a retrieval side (32) of the dispensing rack (3) and are transported away by the conveyor belt (60), and wherein at least one order for requesting medicament packages (2) from the order picking system (1, 1') is input by means of an input module (71) into the control device (7),
wherein the medicament packages (2) emerging from the dispensing rack (3) slide onto the conveyor belt (60) via a sliding plate (8) located in front of it, and the conveyor belt (60) is displaced vertically with the sliding plate (8) on the retrieval side (32) of the dispensing rack (3) in order to receive medicament packages (2), wherein the conveyor belt (60) is positioned at different conveying heights,
**characterized in that** the conveyor belt (60) is displaced back and forth horizontally at the different conveying heights in opposite transport directions (T₁, T₂) by means of the control device (7) and is also stopped temporarily in front of at least one retrieval end in order to retrieve at least one medicament package (2), so that the medicament packages (2) retrieved onto the conveyor belt (60) lie next to one another in a single row on the conveyor belt (60), and the number, grouping, and positional sequence of these medicament packages (2) on the conveyor belt (60) correspond to the at least one order for requesting medicament packages (2).

## Revendications

1. Système de préparation de commandes (1, 1') destiné à la mise en stock et au déstockage des emballages de médicaments (2), dans lequel le système de préparation de commandes (1, 1') comporte une étagère de distribution (3) comportant une pluralité de plateaux d'étagère de distribution (30) superposés, lesquels sont inclinés vers le bas depuis un côté de stockage (31) de l'étagère de distribution (3) jusqu'à un côté de déstockage (32) de l'étagère de distribution (3) et comportent respectivement une pluralité de canaux de distribution (33) parallèles, dans lequel, au niveau d'une extrémité de déstockage du canal de distribution (33) respectif se trouvant sur le côté de déstockage (32) de l'étagère de distribution (3), un verrou anti-glissement (4) est respectivement fourni ; un mécanisme de distribution (5) au moyen duquel le verrou anti-glissement (4) peut être ouvert ou surmonté ; un dispositif de transport (6) s'étendant dans une direction de largeur (B_{A}) de l'étagère de distribution (3) sur son côté de déstockage (32) et comportant une bande transporteuse (60) mobile horizontalement, et un dispositif de commande (7) commandant le mécanisme de distribution (5) et comportant un module de saisie (71) dans lequel au moins une commande de transport des emballages de médicaments (2) vers le système de préparation de commandes (1, 1') peut être saisie,
dans lequel une plaque de glissement (8), s'étendant sur le côté de déstockage (32) devant les extrémités de déstockage dans la direction de largeur (B_{A}) de l'étagère de distribution (3) et étant inclinée vers le bas à partir des extrémités de déstockage, est disposée, dans lequel le dispositif de transport (6) commandé par le dispositif de commande s'étend le long de la plaque de glissement (8) et peut être déplacé verticalement avec la bande transporteuse (60) et la plaque de glissement (8) sur le côté de déstockage (32) de l'étagère de distribution (3), la bande transporteuse (60) pouvant être positionnée à différentes hauteurs de transport, **caractérisé en ce que** la bande transporteuse (60) peut être déplacée horizontalement d'avant en arrière par le dispositif de commande (7) aux différentes hauteurs de transport dans des directions de transport (T₁, T₂) opposées et peut également être temporairement arrêtée devant au moins une extrémité de déstockage pour le déstockage d'au moins un emballage de médicaments (2) de telle sorte que les emballages de médicaments (2) déstockés sur la bande transporteuse (60) reposent les uns à côté des autres en une seule rangée sur la bande transporteuse (60) et le nombre, le groupement et l'ordre de position desdits emballages de médicaments (2) sur la bande transporteuse (60) correspondent à l'au moins une commande de transport des emballages de médicaments (2).

2. Système de préparation de commandes (1, 1') selon la revendication 1, **caractérisé en ce que** le verrou anti-glissement (4) comporte une barre transversale (41) disposée au niveau de l'extrémité de déstockage du plateau de l'étagère de distribution (30) respectif et le mécanisme de distribution (5) comporte un levier d'éjection (51) pouvant être positionné derrière la barre transversale (41), mobile verticalement et venant en prise derrière la barre transversale (41) par le bas.

3. Système de préparation de commandes (1, 1') selon la revendication 2, **caractérisé en ce que** le levier d'éjection (51) est monté pivotant sur un support de levier (52), lequel peut être déplacé sous la bande transporteuse (60) sur un rail (53) s'étendant le long de la direction de largueur (B_{A}) de l'étagère de distribution (3) et monté sur le dispositif de transport (6).

4. Système de préparation de commandes (1, 1') selon l'une quelconque des revendications précédentes, **caractérisé en ce que** le système de préparation de commandes (1) comporte un dispositif de mise en stock (9) automatique sur le côté de stockage (31) de l'étagère de distribution (3), lequel comporte des éléments de séparation de produits et un dispositif de reconnaissance de produit, et un premier dispositif de préhension (11) pouvant être déplacé sur l'étagère de distribution (3) dans une direction de hauteur (H_{A}) et dans la direction de largeur (B_{A}) de l'étagère de distribution (3) et synchronisé en termes de mouvement et de positionnement avec une unité de distribution de produit (98) du dispositif de mise en stock (9) automatique.

5. Système de préparation de commandes (1, 1') selon la revendication 4, **caractérisé en ce que** le système de préparation de commandes (1) comporte un système d'étagère tampon (10), disposé à l'opposé de l'étagère de distribution (3), comportant au moins deux étagères individuelles (101, 102, 103) disposées parallèles l'une à l'autre et présentant une distance de manoeuvre (M) l'une par rapport à l'autre ou pouvant être déplacées à la distance de manoeuvre (M) l'une par rapport à l'autre, dans lequel chacune des étagères individuelles (101, 102, 103) comporte une pluralité de plateaux d'étagère tampon (130) superposés, dans lequel le dispositif de mise en stock (9) automatique est disposé à une distance de transfert (U) entre l'étagère de distribution (3) et le système d'étagère tampon (10), et comporte un second dispositif de préhension (12) pouvant être déplacé sur et entre les étagères individuelles (101, 102, 103) du système d'étagère tampon (10) à la distance de transfert (U) dans une direction de hauteur (H_{P}), dans une direction de largeur (B_{P}) et dans une direction de longueur (L_{P}) du système d'étagère tampon (10), et synchronisé en termes de mouvement et de positionnement avec le dispositif de mise en stock (9) automatique.

6. Système de préparation de commandes (1, 1') selon l'une quelconque des revendications 1 à 3, **caractérisé en ce que** le système de préparation de commandes (1') comporte un système d'étagère tampon (10), disposé à l'opposé du côté de stockage (31) de l'étagère de distribution (3) à une distance de transfert (U), comportant au moins deux étagères individuelles (101, 102, 103) disposées parallèlement l'une à l'autre et présentant une distance de manoeuvre (M) l'une par rapport à l'autre ou pouvant être déplacées à la distance de manoeuvre (M) l'une par rapport à l'autre, dans lequel chacune des étagères individuelles (101, 102) comporte une pluralité de plateaux d'étagère tampon (130) superposés ; un premier dispositif de préhension (11) pouvant être déplacé sur l'étagère de distribution (3) dans une direction de hauteur (H_{A}) et dans une direction de largeur (B_{A}) de l'étagère de distribution (3) et un second dispositif de préhension (12) pouvant être déplacé sur et entre les étagères individuelles (101, 102, 103) du système d'étagère tampon à la distance de transfert (U) dans une direction de hauteur (H_{P}), dans une direction de largeur (B_{P}) et dans une direction de longueur (L_{P}) du système d'étagère tampon (10), et synchronisé en termes de mouvement et de positionnement avec le premier dispositif de préhension (11).

7. Procédé de préparation de commandes destiné à la mise en stock et au déstockage des emballages de médicaments (2), dans lequel, dans un système de préparation de commandes (1, 1'), les emballages de médicaments (2) sont stockés sur plusieurs plateaux d'étagère de distribution (30) d'une étagère de distribution (3) superposés, dans lequel, après avoir été placés sur l'étagère de distribution (3), lesdits emballages de médicaments glissent vers le bas jusqu'à un verrou anti-glissement (4), respectivement dans un canal de distribution (33) de l'étagère de distribution (3) depuis un côté de stockage (31) de l'étagère de distribution (3) jusqu'à un côté de déstockage (32) de l'étagère de distribution (3), et dans lequel, pour la distribution de l'emballage de médicaments (2) respectif à partir de l'étagère de distribution (3), le verrou anti-glissement (4) est surmonté au moyen d'un mécanisme de distribution (5) se trouvant sur le côté de déstockage (32) de l'étagère de distribution (3) et commandé par un dispositif de commande (7) ; dans lequel les emballages de médicaments (2) déstockés depuis l'étagère de distribution (3) glissent sur une bande transporteuse (60) sur un côté de déstockage (32) de l'étagère de distribution (3) et sont transportés par la bande transporteuse (60), et dans lequel au moins une commande de transport des emballages de médicaments (2) au système de préparation de commandes (1, 1') est saisie dans le dispositif de commande (7) au moyen d'un module de saisie (71),
dans lequel les emballages de médicaments (2) sortant de l'étagère de distribution (3) glissent sur la bande transporteuse (60) par l'intermédiaire d'une plaque de glissement (8) située devant celle-ci, et la bande transporteuse (60) est déplacée verticalement avec la plaque de glissement (8) sur le côté de déstockage (32) de l'étagère de distribution (3) pour recevoir des emballages de médicaments (2), dans lequel la bande transporteuse (60) est positionnée à différentes hauteurs de transport,
**caractérisé en ce que** la bande transporteuse (60) est déplacée d'avant en arrière horizontalement aux différentes hauteurs de transport dans des directions de transport (T₁, T₂) opposées par le dispositif de commande (7) et peut également être arrêtée temporairement devant au moins une extrémité de déstockage pour le déstockage de l'au moins un emballage de médicaments (2) de telle sorte que les emballages de médicaments (2) déstockés sur la bande transporteuse (60) reposent les uns à côté des autres en une seule rangée sur la bande transporteuse (60) et le nombre, le groupement et l'ordre de position desdits emballages de médicaments (2) sur la bande transporteuse (60) correspondent à l'au moins une commande de transport des emballages de médicaments (2).
